# EUROPEAN PATENT APPLICATION

(11) **EP 4 528 576 A1**
(43) Date of publication of application: **26.03.2025**
(21) Application number: 23868544.0
(22) Date of filing: 19.09.2023
(51) Int. Cl.: G06F 40/106, G06F 40/189, G06F 40/114, G06F 3/048, G06V 30/418, G06V 30/148, G06V 30/146

(54) **ELECTRONIC DEVICE FOR DISPLAYING IMAGE AND OPERATION METHOD OF ELECTRONIC DEVICE**

(30) Priority: 20.09.2022 KR 20220118693
(71) Applicant: Samsung Electronics Co., Ltd., Suwon-si, Gyeonggi-do 16677 (KR)
(72) Inventor: CHO, Junghoon, Suwon-si, Gyeonggi-do 16677 (KR); KIM, Yongnam, Suwon-si, Gyeonggi-do 16677 (KR); PARK, Jisun, Suwon-si, Gyeonggi-do 16677 (KR); SOHN, Junil, Suwon-si, Gyeonggi-do 16677 (KR); YI, Sanghyun, Suwon-si, Gyeonggi-do 16677 (KR); KOO, Bonkon, Suwon-si, Gyeonggi-do 16677 (KR)
(74) Representative: Gulde & Partner
(86) International application number: PCT/KR2023/014115
(87) International publication number: WO 2024/063492

(57) **Abstract**

An electronic apparatus includes a display, a memory storing at least one instruction, and at least one processor configured to execute the at least one instruction stored in the memory to obtain input documents, recognize an element including at least one of a character, an image, or a combination of the character and the image from each of the input documents, classify a type of each of the input documents based on a kind of the recognized element, obtain calibration documents by arranging the recognized elements in a row based on the classified type of each of the input documents, and control the display to display the obtained calibration documents, and an operating method of the electronic apparatus.

## Description

### TECHNICAL FIELD

The disclosure relates to an electronic apparatus for displaying an image and an operating method of the electronic apparatus. Specifically, the disclosure relates to an electronic apparatus including a display and displaying a calibration document generated based on an obtained input document on the display and an operating method of the electronic apparatus.

### BACKGROUND ART

With the development of technology, visual aids have been developed to provide convenience to users who view objects located in the real world, such as newspapers, books, and Internet news.

The visual aids may photograph an object located in the real world, magnify or color-invert a captured image, and then provide the image to a user. In addition, the visual aids may have a magnification function so that the user may magnify and view the object located in the real world through the visual aids.

### DESCRIPTION OF EMBODIMENTS

### TECHNICAL PROBLEM

An electronic apparatus according to an embodiment of the disclosure may include a display, a memory storing at least one instruction, and at least one processor configured to execute the at least one instruction stored in the memory. In an embodiment of the disclosure, the at least one processor may be configured to obtain input documents. The at least one processor may be configured to recognize an element including at least one of a character, an image, or a combination of the character and the image from each of the input documents. The at least one processor may be configured to classify a type of each of the input documents based on a kind of the recognized element. The at least one processor may be configured to obtain calibration documents by arranging the recognized elements in a row based on the classified type of each of the input documents. The at least one processor may be configured to control the display to display the obtained calibration documents.

An embodiment of the disclosure may provide an operating method of an electronic apparatus including a display. In an embodiment of the disclosure, the operating method of the electronic apparatus may include obtaining input documents. The operating method of the electronic apparatus may include recognizing an element including at least one of a character, an image, or a combination of the character and the image from each of the input documents. The operating method of the electronic apparatus may include classifying a type of each of the input documents based on a kind of the recognized element. The operating method of the electronic apparatus may include obtaining calibration documents by arranging the recognized elements in a row based on the classified type of each of the input documents. The operating method of the electronic apparatus may include displaying the obtained calibration documents on the display.

An embodiment of the disclosure may provide a computer-readable recording medium having recorded thereon a program for causing a computer to perform one of the operating methods disclosed herein.

### BRIEF DESCRIPTION OF DRAWINGS

The disclosure may be understood in combination with the following detailed description and accompanying drawings, wherein reference numerals refer to structural elements.
FIG. 1 is a diagram for describing an electronic apparatus according to an embodiment of the disclosure.
FIG. 2 is a diagram for explaining an electronic apparatus and an operating method of the electronic apparatus, according to an embodiment of the disclosure.
FIG. 3 is a block diagram for explaining an electronic apparatus and an operating method of the electronic apparatus, according to an embodiment of the disclosure.
FIG. 4 is a flowchart illustrating an operating method of an electronic apparatus, according to an embodiment of the disclosure.
FIG. 5 is a diagram for explaining an operation of obtaining content including elements, according to an embodiment of the disclosure.
FIG. 6 is a flowchart for explaining an operating method of an electronic apparatus, according to an embodiment of the disclosure.
FIG. 7 is a flowchart for explaining an operating method of an electronic apparatus when an element includes a character, according to an embodiment of the disclosure.
FIG. 8A is a diagram for explaining an operation of classifying a type of an input document based on a kind of an element, according to an embodiment of the disclosure.
FIG. 8B is a diagram for explaining an operation of identifying an order of elements based on the classified type of the input document, according to an embodiment of the disclosure.
FIG. 8C is a diagram for explaining obtaining a calibration document by arranging elements in a row according to the identified order, according to an embodiment of the disclosure.
FIG. 8D is a conceptual diagram for explaining a method of displaying the obtained calibration document on a display by arranging characters in a row, according to an embodiment of the disclosure.
FIG. 9 is a flowchart for explaining an operating method of an electronic apparatus when elements include characters and images, according to an embodiment of the disclosure.
FIG. 10A is a diagram for explaining an operation of classifying a type of an input document based on a kind of an element, according to an embodiment of the disclosure.
FIG. 10B is a diagram for explaining an operation of identifying an order of elements based on the classified type of the input document, according to an embodiment of the disclosure.
FIG. 10C is a diagram for explaining obtaining a calibration document by arranging elements in a row according to the identified order, according to an embodiment of the disclosure.
FIG. 10D is a conceptual diagram for explaining a method of displaying the calibration document obtained by arranging characters and images in a row on a display, according to an embodiment of the disclosure.
FIG. 11 is a flowchart for explaining an operating method of an electronic apparatus when an element includes a scene, according to an embodiment of the disclosure.
FIG. 12A is a diagram for explaining an operation of classifying a type of an input document based on a kind of an element, according to an embodiment of the disclosure.
FIG. 12B is a diagram for explaining an operation of identifying an order of elements based on the classified type of the input document, according to an embodiment of the disclosure.
FIG. 12C is a diagram for explaining obtaining a calibration document by arranging elements in a row according to the identified order, according to an embodiment of the disclosure.
FIG. 12D is a conceptual diagram for explaining a method of displaying an output image including the calibration document obtained by arranging scenes in a row on a display, according to an embodiment of the disclosure.
FIG. 13 is a diagram for explaining a method of controlling an obtained calibration document, according to an embodiment of the disclosure.
FIG. 14 is a conceptual diagram for explaining a method of controlling a scrolling method of a calibration document displayed on a display, according to an embodiment of the disclosure.
FIG. 15 is a conceptual diagram for explaining a method of controlling a moving method of a calibration document displayed on a display, according to an embodiment of the disclosure.
FIG. 16 is a conceptual diagram for explaining a method of controlling a saving method of an obtained calibration document, according to an embodiment of the disclosure.
FIG. 17 is a conceptual diagram for explaining a method of controlling a loading method of a calibration document, according to an embodiment of the disclosure.

### MODE OF DISCLOSURE

Throughout the disclosure, the expression "at least one of a, b, or c" indicates only a, only b, only c, both a and b, both a and c, both b and c, all of a, b, and c, or variations thereof.

The terms as used herein are briefly described, and an embodiment of the disclosure is described in detail.

As for the terms as used herein, common terms that are currently widely used are selected as much as possible while taking into account functions in an embodiment of the disclosure. However, the terms may vary depending on the intention of those of ordinary skill in the art, precedents, the emergence of new technology, and the like. Also, in a specific case, there are also terms arbitrarily selected by the applicant. In this case, the meaning of the terms will be described in detail in the description of embodiments of the disclosure. Therefore, the terms as used herein should be defined based on the meaning of the terms and the description throughout the disclosure rather than simply the names of the terms.

The singular forms "a," "an," and "the" as used herein are intended to include the plural forms as well unless the context clearly indicates otherwise. All terms including technical or scientific terms as used herein have the same meaning as commonly understood by those of ordinary skill in the art.

Throughout the disclosure, the expression "a portion includes a certain element" means that a portion further includes other elements rather than excludes other elements unless otherwise stated. Also, the terms such as "...er/or" and "module" as used herein mean units that process at least one function or operation, and may be implemented as hardware, software, or a combination of hardware and software.

The expression "configured to" as used herein may be used interchangeably with, for example, "suitable for," "having the capacity to," "designed to," "adapted to," "made to," or "capable of" depending on a situation. The term "configured to" may not necessarily mean only "specifically designed to" in hardware. Instead, in some situations, the expression "a system configured to..." may mean that the system is "capable of..." with other devices or components. For example, "a processor configured to perform A, B, and C" may refer to a dedicated processor (e.g., an embedded processor) for performing corresponding operations or a generic-purpose processor (e.g., a central processing unit (CPU) or an application processor) capable of performing corresponding operations by executing one or more software programs stored in a memory.

Also, when one element is referred to as "connected" or "coupled" to another element, the one element may be directly connected or coupled to the other element, but it will be understood that the elements may be connected or coupled to each other via an intervening element therebetween unless the context clearly indicates otherwise.

Hereinafter, embodiments of the disclosure will be described in detail with reference to the accompanying drawings, so that those of ordinary skill in the art may easily carry out the disclosure. However, the disclosure may be implemented in various different forms and is not limited to the embodiments described herein. To clearly explain an embodiment of the disclosure, parts irrelevant to the description are omitted in the drawings, and similar reference numerals are assigned to similar parts throughout the disclosure.

Hereinafter, embodiments of the disclosure will be described in described in detail with reference to the drawings.

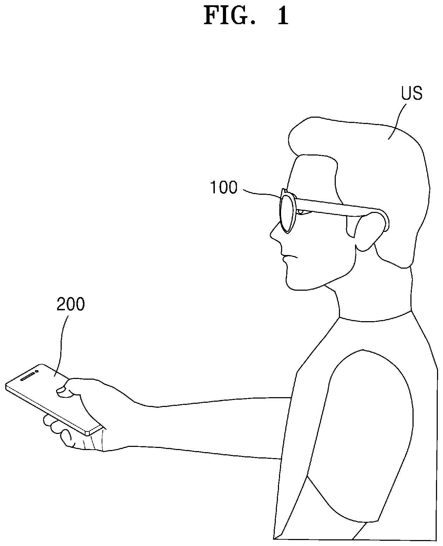

FIG. 1 is a diagram for explaining an electronic apparatus according to an embodiment of the disclosure.

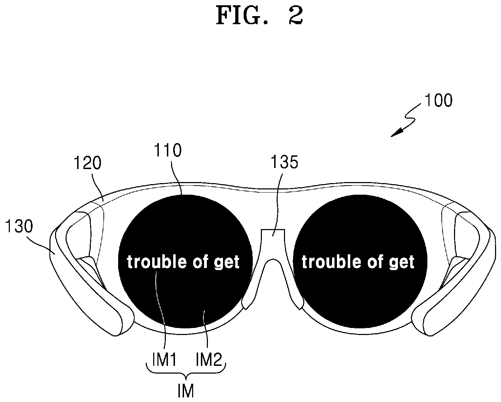

Referring to FIG. 1, an electronic apparatus 100 according to an embodiment of the disclosure may provide an output image IM (see FIG. 2) to a user US wearing the electronic apparatus 100. In an embodiment of the disclosure, the electronic apparatus 100 is an apparatus capable of providing the output image IM to the user US, and is shown in FIG. 1 in the shape of glasses worn on the face of the user US. However, the disclosure is not limited thereto, and the electronic apparatus 100 may be implemented as an electronic apparatus in the form of a head mounted display (HMD) apparatus or a helmet which is worn on the head of the user US. In addition, as an example of the disclosure, the electronic apparatus 100 may be implemented in various shapes of electronic apparatus such as a mobile device, a smart phone, a laptop computer, a desktop, a tablet PC, an e-book reader, a digital broadcasting terminal, a personal digital assistant (PDA), a portable multimedia player (PMP), a wearable device, etc.

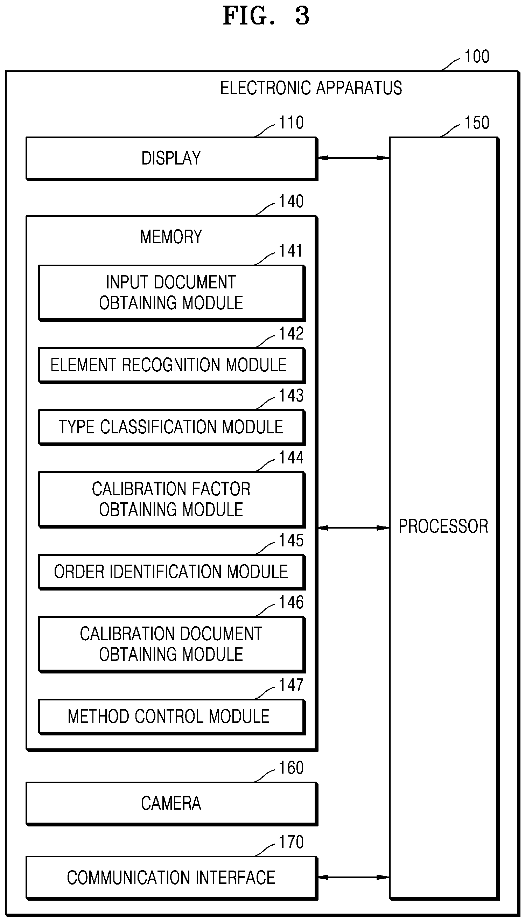

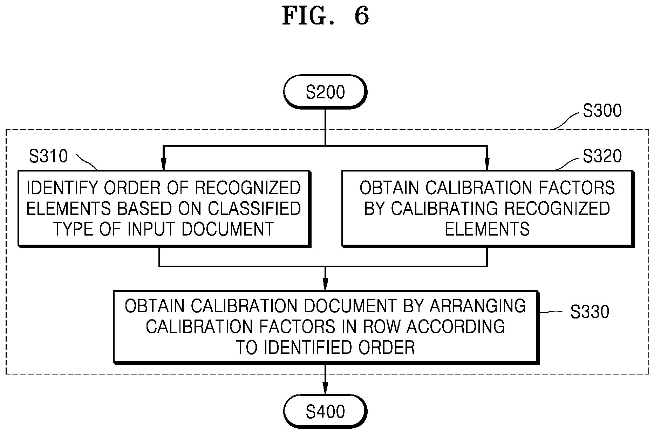

In an embodiment of the disclosure, the electronic apparatus 100 may be a video see-through electronic apparatus photographing a physical environment space of the real world with a camera 160 (see FIG. 3), obtaining an input image, and then providing the obtained input image to the user US through a display 110 (see FIG. 2). In an embodiment of the disclosure, the electronic apparatus 100 may photograph a target document TD (see FIG. 6) existing in the real world by using the camera 160 and obtaining an input document ID (see FIG. 6), and then, provide a calibration document generated based on the input document ID to the user US through the display 110. In an embodiment of the disclosure, the electronic apparatus 100 may generate the calibration document based on the pre-stored input document ID or the externally provided input document ID.

However, the disclosure is not limited thereto. The electronic apparatus 100 may also be an optical see-through electronic apparatus making it possible for the user US to observe the physical environment space of the real world through a waveguide (or a light guide plate) formed of a transparent material, and capable of providing light generated in an optical engine to the eyes of the user US through the wave guide and providing a virtual image. In an embodiment of the disclosure, the electronic apparatus 100 may photograph the target document TD of the real world observed by the user US with the camera 160, obtain the input document ID, then provide the light generated the optical engine to the wave guide and provide the calibration document generated based on the input document ID to the user US.

Hereinafter, for convenience of description, the electronic apparatus 100 is described as the video see-through electronic apparatus in the shape of glasses worn on the face of the user US.

In an embodiment of the disclosure, the user US may use a separate external device 200 that performs data communication with the electronic apparatus 100. In an embodiment of the disclosure, the external electronic apparatus 200 may be implemented in various shapes of electronic apparatus such as a mobile device, a smart phone, a laptop computer, a desktop, a tablet PC, an e-book reader, a digital broadcasting terminal, a personal digital assistant (PDA), a portable multimedia player (PMP), a wearable device, etc.

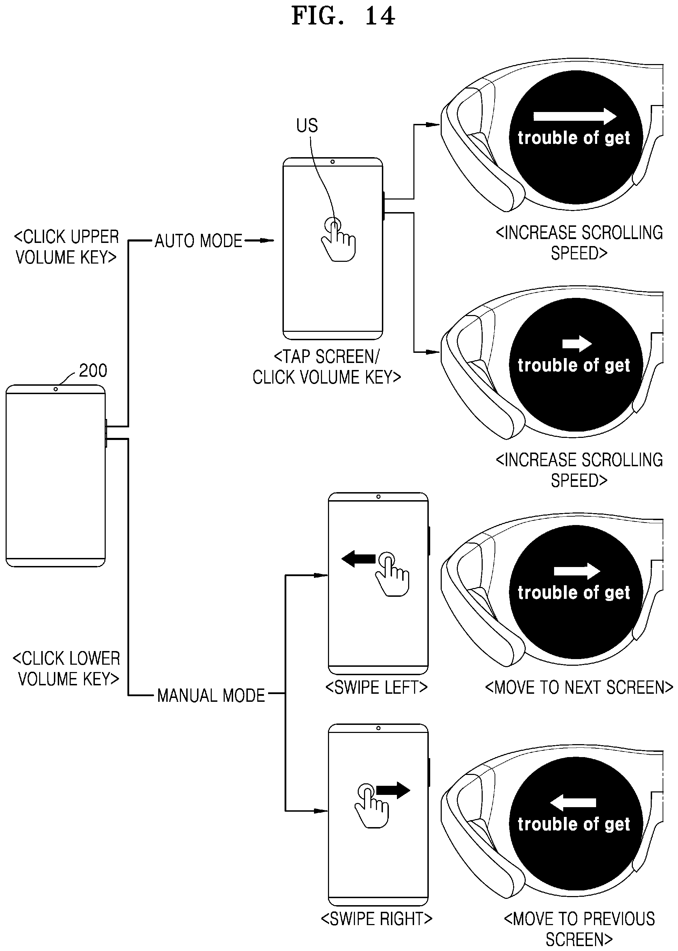

In an embodiment of the disclosure, the user US may control an operation of the electronic apparatus 100 by using the external electronic apparatus 200. Hereinafter, controlling the operation of the electronic apparatus 100 by using the external electronic apparatus 200 is described below with reference to FIGS. 14 to 17. However, the disclosure is not limited thereto, and the user US may control the operation of the electronic apparatus 100 by using the electronic apparatus 100.

FIG. 2 is a diagram for explaining an electronic apparatus and an operating method of the electronic apparatus according to an embodiment of the disclosure. Hereinafter, the same elements as those described with reference to FIG. 1 are denoted by the same reference numerals, and descriptions thereof are omitted.

Referring to FIG. 2, the electronic apparatus 100 may include a display 110, a frame 120, temples 130, and a nose support 135. In an embodiment of the disclosure, only elements for explaining a structure of the electronic apparatus 100 are shown in FIG. 2, and the elements included in the electronic apparatus 100 are not limited to those as shown in FIG. 2. In an embodiment of the disclosure, the electronic apparatus 100 may include a camera 160 (see FIG. 3) to photograph the target document TD (see FIG. 6) in the real world, an eye tracking sensor capable of tracking the eyes of the user US (see FIG. 1), a memory including at least one instruction, at least one processor, and a battery.

In an embodiment of the disclosure, the display 110 may be disposed in the frame 120. The display 110 is shown as having a circular shape in FIG. 2, but the disclosure is not limited thereto. The display 110 may have a square shape, etc. In an embodiment of the disclosure, FIG. 2 shows that the display 110 includes two sub displays, and each of the sub displays provides the output image IM to the user US. However, the disclosure is not limited thereto, and a display having an integral shape may provide the output image IM to the user US.

In an embodiment of the disclosure, the frame 120 may have a shape similar to a frame of a general eyeglass structure. The frame 120 may include a rim shape surrounding the display 110. When the display 110 includes two sub displays, the frame 120 may include two rims respectively surrounding the two sub displays.

In an embodiment of the disclosure, the temples 130 may be connected to the frame 120. The temples 130 are parts that support the electronic apparatus 100 by hanging over the ears of the user US when the user US wears the electronic apparatus 100. In an embodiment of the disclosure, when the electronic apparatus 100 includes a memory, a processor, and a battery, the memory, processor, and battery may be embedded in the temples 130.

In an embodiment of the disclosure, the nose support 135 may be connected to the frame 120. The nose support part 135 is a part that spans the nose of the user US and supports the electronic apparatus 100 when the user US wears the electronic apparatus 100. In an embodiment of the disclosure, the nose support 135 may include a nose bridge and a glasses nose. In addition, the bridge of the nose and the nose of the glasses may be integrally configured, but are not limited thereto. In an embodiment of the disclosure, the nose support 135 and the frame 120 may be integrally formed.

In an embodiment of the disclosure, the electronic apparatus 100 may further include the camera 160 (see FIG. 3) connected to the frame 120. The camera 160 may be disposed toward a physical environment space of the real world. In an embodiment of the disclosure, the camera 160 may photograph the real world in a direction opposite to a direction in which the display 110 faces the user US.

In an embodiment of the disclosure, the display 110 may provide the output image IM to the user US. In an embodiment of the disclosure, the display 110 may provide a calibration document to be described below to the user US as the output image IM. In an embodiment of the disclosure, the electronic apparatus 100 may provide a part of the calibration document to the user US. In an embodiment of the disclosure, the electronic apparatus 100 may provide the calibration document to the user US during one period including a plurality of image frames. In this regard, in each image frame included in one period, the electronic apparatus 100 may provide a part of the calibration document to the user US. In an embodiment of the disclosure, calibration documents may be sequentially provided to the user US during one period.

In an embodiment of the disclosure, the output image IM may include a first output image IM1 and a second output image IM2. The first output image IM1 may include elements included in the calibration document. The second output image IM2 may be a background image of the first output image IM1.

In an embodiment of the disclosure, the first output image IM1 may include at least one of a character, an image, or a scene according to a type of the calibration document. In an embodiment of the disclosure, the scene may be a combination of character and image.

The second output image IM2 may be an image for enhancing the visibility of the first output image IM1 provided to the user US. In an embodiment of the disclosure, the second output image IM2 may have a different gray level from that of the first output image IM1. The second output image IM2 may be an image including black or a gray level lower than that of the first output image IM1.

FIG. 3 is a block diagram for explaining an electronic apparatus and an operating method of the electronic apparatus according to an embodiment of the disclosure.

Referring to FIG. 3, the electronic apparatus 100 may include the display 110, a memory 140, a processor 150, the camera 160, and a communication interface 170. However, all of the elements shown in FIG. 3 are not indispensable elements. The electronic apparatus 100 may be implemented with more or fewer elements than the elements shown in FIG. 3. In an embodiment of the disclosure, the electronic apparatus 100 may further include the temples 130, the nose support 135, etc.

In an embodiment of the disclosure, the display 110, the memory 140, the processor 150, the camera 160, and the communication interface 170 may be electrically and/or physically connected to each other. Hereinafter, the same elements as those described with reference to FIGS. 1 and 2 are denoted by the same reference numerals, and descriptions thereof are omitted.

In an embodiment of the disclosure, the display 110 may include one of a liquid crystal display, a plasma display, an organic light-emitting diode display, and an inorganic light-emitting diode display. However, the disclosure is not limited thereto, and the display 110 may include another kind of display capable of providing the output image IM to the user US.

In an embodiment of the disclosure, when the electronic apparatus 100 is an optical see-through electronic apparatus, the display 110 may include a wave guide formed of a transparent material. In this case, the electronic apparatus 100 may further include an optical module generating light for displaying the output image IM (see FIG. 2) and projecting the light to the wave guide. The optical module may perform the same function as a projector. In an embodiment of the disclosure, the optical module may further include an illumination optical system, an optical path converter, an image panel, a beam splitter, and a projection optical system.

In an embodiment of the disclosure, the memory 140 may include at least one of flash memory-type memory, hard disk-type memory, multimedia card micro-type memory, card-type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), mask ROM, flash ROM, hard disk drive (HDD), or solid state drive (SSD). The memory 140 may store instructions or program code for performing functions or operations of the electronic apparatus 100. At least one instruction, algorithm, data structure, program code, and application program, which are stored in the memory 140, may be implemented in, for example, programming or scripting languages, such as C, C++, Java, or assembler.

In an embodiment of the disclosure, the memory 140 may store various kinds of modules that may be used to obtain the input document ID (see FIG. 6), and display, on the display 110, a calibration document obtained by arranging elements included in the input document ID in a row according to an order.

In an embodiment of the disclosure, the memory 140 may store an input document obtaining module 141, an element recognition module 142, a type classification module 143, a calibration factor obtaining module 144, an order identification module 145, a calibration document obtaining module 146, and a method control module 147. However, all of the modules shown in FIG. 3 are not indispensable modules. The memory 140 may store more or fewer modules than the modules shown in FIG. 3.

The "module" included in the memory 140 may mean a unit that processes a function or operation to be performed by the processor 150. The "module" included in the memory 140 may be implemented as software, such as at least one instruction, algorithm, data structure, or program code.

In an embodiment of the disclosure, the input document obtaining module 141 may include instructions or program code related to an operation or function in which the electronic apparatus 100 obtains the input document ID including elements. In an embodiment of the disclosure, the at least one processor 150 may execute instructions or program codes of the input document obtaining module 141 to photograph the target document TD in the real world through the camera 160 and obtain the input document ID.

In an embodiment of the disclosure, the element recognition module 142 may include instructions or program codes related to an operation or function of recognizing the elements included in the obtained input document ID. In an embodiment of the disclosure, the at least one processor 150 may execute instructions or program codes of the element recognition module 142 to recognize at least one of characters, images, or scenes included in the input document ID.

In an embodiment of the disclosure, the type classification module 143 may include instructions or program codes related to an operation or function of classifying a type of the input document ID based on a kind of the recognized element.

In an embodiment of the disclosure, the at least one processor 150 may execute instructions or program codes of the type classification module 143 to classify the input document ID as a first type when the element recognized from the input document ID is the character. In an embodiment of the disclosure, the at least one processor 150 may execute instructions or program codes of the type classification module 143 to classify the input document ID as a second type when the element recognized from the input document ID includes the character and the image. In an embodiment of the disclosure, the at least one processor 150 may execute instructions or program codes of the type classification module 143 to classify the input document ID as a third type when the element recognized from the input document ID includes the scene. In an embodiment of the disclosure, the scene may be an element included in comics, cartoon, webtoon, etc. In an embodiment of the disclosure, the scene may be referred to as a column or a cut included in comics, cartoon, webtoon, etc.

In an embodiment of the disclosure, the type classification module 143 may include instructions or program codes related to an operation or function of classifying the type of the input document ID based on an arrangement of recognized elements. In an embodiment of the disclosure, the at least one processor 150 may execute instructions or program codes of the type classification module 143 to classify texts included in the input document ID based on an arrangement of recognized characters when the kind of the recognized element is the character. In this regard, a text may mean a sentence or a paragraph including at least one character. Also, the text may include a plurality of paragraphs arranged in one direction.

In an embodiment of the disclosure, when the element included in the input document ID includes a first text TG_1 including at least one character, the at least one processor 150 may execute instructions or program codes of the type classification module 143, thereby classifying the input document ID as a first sub type including the first text TG_1 based on an arrangement of the recognized at least one character. In an embodiment of the disclosure, the first sub type may be a type including one text.

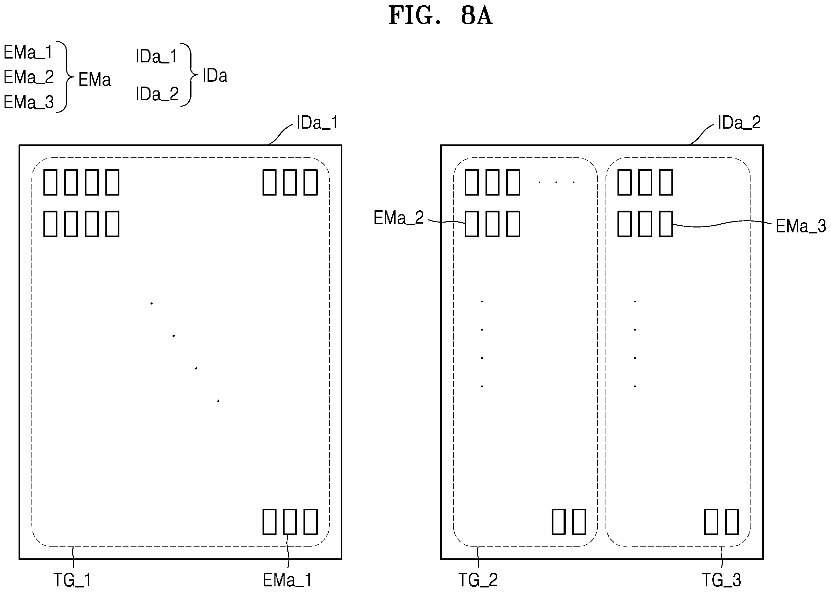

In an embodiment of the disclosure, when the element included in the input document ID includes a second text TG_2 (see FIG. 8A) including at least one character and a third text TG_3 (see FIG. 8A) that includes at least one character and is distinguished from the second text TG_2, the at least one processor 150 may execute instructions or program codes of the type classification module 143 to classify the input document ID as a second sub type including second text TG_2 and the third text TG_3 based on an arrangement of a plurality of recognized characters.

However, the disclosure is not limited thereto, and the input document ID may include three or more texts, and the at least one processor 150 may execute instructions or program codes of the type classification module 143 to classify the input document ID as a sub type including three or more texts based on the arrangement of the plurality of recognized characters.

In an embodiment of the disclosure, the calibration factor obtaining module 144 may include instructions or program codes related to an operation or function of obtaining a calibration factor by calibrating a recognized element. In an embodiment of the disclosure, the at least one processor 150 may execute instructions or program codes of the calibration factor obtaining module 144, thereby obtaining the calibration factor by magnifying or de-magnifying the recognized element or calibrating the calibration factor by color inversion such as a negative color.

In an embodiment of the disclosure, when the recognized element includes the character, the at least one processor 150 may execute instructions or program codes of the calibration factor obtaining module 144 to obtain the calibration factor by magnifying, de-magnifying or color inverting the character. In an embodiment of the disclosure, when the recognized elements include the character and the image, the at least one processor 150 may execute instructions or program codes of the calibration factor obtaining module 144 to invert colors of characters but not invert colors of images. In an embodiment of the disclosure, when the recognized element includes the scene, the at least one processor 150 may execute instructions or program codes of the calibration factor obtaining module 144 to obtain a calibration image by magnifying the scene.

In an embodiment of the disclosure, the order identification module 145 may include instructions or program codes related to an operation or function of identifying the order of elements included in the input document ID based on the classified type of the input document ID.

In an embodiment of the disclosure, when the input document ID is of the first type, the at least one processor 150 may execute instructions or program codes of the order identification module 145 to determine the order of characters included in the input document ID based on the first type. When the input document ID is of the second type, the at least one processor 150 may execute instructions or program codes of the order identification module 145 to determine the order of characters and images included in the input document ID based on the second type. When the input document ID is of the third type, the at least one processor 150 may execute instructions or program codes of the order identification module 145 to determine the order of scenes included in the input document ID based on the third type.

In an embodiment of the disclosure, when the input document ID is of one of the first sub type or the second sub type, the at least one processor 150 may execute instructions or program codes of the order identification module 145 to identify the order of a plurality of characters included in the input document ID based on the one sub type. When the input document ID is of the first sub type, the at least one processor 150 may execute instructions or program codes of the order identification module 145 to identify the order of the plurality of characters included in the input document ID based on the first sub type. When the input document ID is of the second sub type, the at least one processor 150 may execute instructions or program codes of the order identification module 145 to identify the order of the plurality of characters included in the input document ID based on the second sub type.

In an embodiment of the disclosure, the calibration document obtaining module 146 may include instructions or program codes related to an operation or function of obtaining a calibration document by arranging recognized elements in a row according to the identified order according to the classified type of the input document ID.

In an embodiment of the disclosure, the at least one processor 150 may execute instructions or program codes of the calibration document obtaining module 146 to obtain a calibration document by arranging recognized characters in a row according to the order of the identified characters when the input document ID is classified as the first type. In an embodiment of the disclosure, the at least one processor 150 may execute instructions or program codes of the calibration document obtaining module 146 to obtain a calibration document by arranging recognized characters and recognized images in a row according to the order of the identified characters and images when the input document ID is classified as the second type. In an embodiment of the disclosure, the at least one processor 150 may execute instructions or program codes of the calibration document obtaining module 146 to obtain a calibration document by arranging recognized scenes in a row according to the order of the identified scenes when the input document ID is classified as the third type.

In an embodiment of the disclosure, the at least one processor 150 may execute instructions or program codes of the calibration document obtaining module 146 to obtain a calibration document by arranging recognized plurality of characters in a row according to the order of the identified plurality of characters when the input document ID is classified as the first sub type. In an embodiment of the disclosure, the at least one processor 150 may execute instructions or program codes of the calibration document obtaining module 146 to obtain a calibration document by arranging recognized plurality of characters in a row according to the order of the identified plurality of characters when the input document ID is classified as the second sub type.

In an embodiment of the disclosure, the method control module 147 may include instructions or program codes related to an operation or function of controlling the obtained calibration document and an operation or function of displaying the calibration document on the display 110.

In an embodiment of the disclosure, the at least one processor 150 may execute instructions or program codes of the method control module 147 to control a method of saving the obtained calibration. The at least one processor 150 may execute instructions or program codes of the method control module 147 to control a method of loading the pre-obtained calibration document. In an embodiment of the disclosure, the at least one processor 150 may execute instructions or program codes of the method control module 147 to control a method of scrolling the calibration document displayed on the display 110. The at least one processor 150 may execute instructions or program codes of the method control module 147 to control a method of moving the calibration document displayed on the display 110. The at least one processor 150 may execute instructions or program codes of the method control module 147 to control a method of magnifying or de-magnifying the calibration document displayed on the display 110.

In an embodiment of the disclosure, at least one of the type classification module 143 or the order identification module 145 may include an artificial intelligence (AI) model. In an embodiment of the disclosure, the Al model included in at least one of the type classification module 143 or the order identification module 145 may include a machine learning or deep learning model.

In an embodiment of the disclosure, the Al model included in at least one of the type classification module 143 or the order identification module 145 may include a plurality of neural network layers. Each of the neural network layers may have multiple weight values and may perform an operation of a present neural network layer through an operation result of a previous neural network layer and a calculation of multiple weight values. Examples of the Al model may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, a generative adversarial network(GAN), and a variational autoencoder (VAE). The Al model included in each of the type classification module 143 and the order identification module 145 according to the disclosure is not limited to the examples described above.

In an embodiment of the disclosure, the Al model included in the type classification module 143 may be trained to classify the type of the input document ID based on the based on the kind of the recognized elementneighboring electronic apparatuses. In an embodiment of the disclosure, the communication interface 170 may perform data communication with the external server, the external apparatus 200, or other neighboring electronic apparatuses by using at least one of data communication schemes including, for example, wired local area network (LAN), wireless LAN, Wireless Fidelity (Wi-Fi), Bluetooth, ZigBee, Wi-Fi Direct (WFD), Infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliance (WiGig), and radio frequency (RF) communication.

In an embodiment of the disclosure, the communication interface 170 may receive the pre-obtained calibration document from the server, the external device 200 or other neighboring electronic apparatuses.

The electronic apparatus 100 may provide the received pre-obtained calibration document to the user US. In an embodiment of the disclosure, the communication interface 170 may receive a control signal including information about a method of controlling the obtained calibration document from the server, the external electronic apparatus 200, or other neighboring electronic apparatuses. The communication interface 170 may receive a control signal including information about a method of saving the obtained calibration document from the server, the external electronic apparatus 200, or other neighboring electronic apparatuses, or information about a method of loading the pre-obtained calibration document.

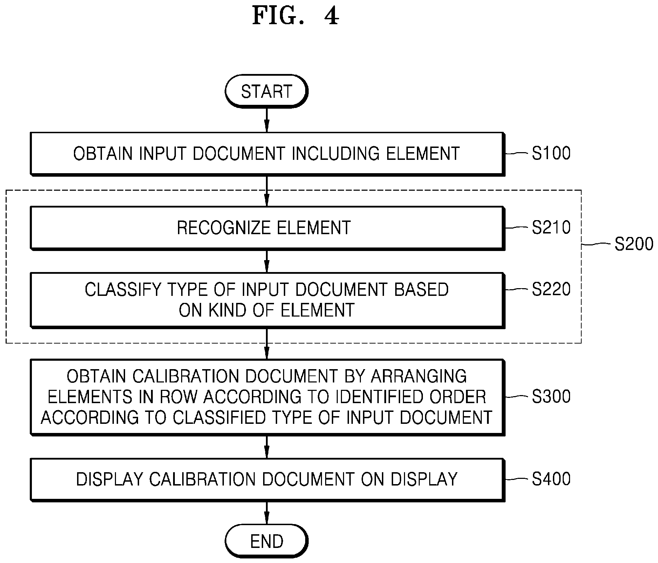

In an embodiment of the disclosure, the communication interface 170 may receive a control signal including information about of a method of displaying the obtained calibration document on the display 110 from the server, the external electronic apparatus 200, or other neighboring electronic apparatuses. The communication interface 170 may receive a control signal including information about at least one of a method of scrolling the calibration document displayed on the display 110, a method of moving the calibration document displayed on the display 110, or a method of magnifying and de-magnifying the calibration document displayed on the display 110 from the server, the external electronic apparatus 200 or other neighboring electronic apparatuses. FIG. 4 is a flowchart illustrating an operating method of an electronic apparatus according to an embodiment of the disclosure.

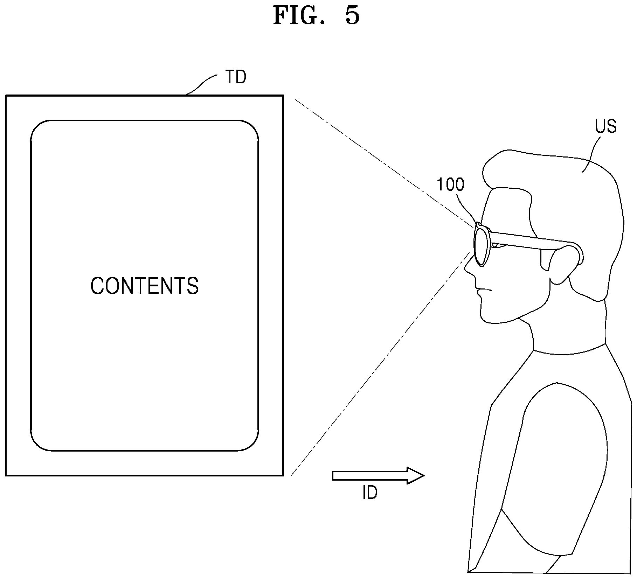

FIG. 5 is a diagram for explaining an operation of obtaining content including elements according to an embodiment of the disclosure.

Hereinafter, the same elements as those described with reference to FIG. 1 are denoted by the same reference numerals, and descriptions thereof are omitted. Referring to FIGS. 3, 4, and 5, in an embodiment of the disclosure, the operating method of the electronic apparatus 100 may include operation S100 of obtaining the input document ID including elements.

In an embodiment of the disclosure, the at least one processor 150 may obtain the input document ID including elements. The at least one processor 150 may execute the input document obtaining module 141 to photograph the target document TD in the real world through the camera 160 and obtain the input document ID.

In an embodiment of the disclosure, the target document TD may include content including elements. In an embodiment of the disclosure, when the target document TD includes content including only characters, the obtained input document ID may also include content including only characters.

In this case, the at least one processor 150 may classify the input document ID as a first type to be described below. In an embodiment of the disclosure, when the target document TD includes content including the first text TG_1 (see FIG. 8A), the obtained input document ID may also include content including the first text TG_1. In this case, the at least one processor 150 may classify the input document ID as a first sub type to be described below.

In an embodiment of the disclosure, when the target document TD includes content including a second text TG_2 (see FIG. 8A) and a third text TG_3 (see FIG. 8A), the obtained input document ID may also include the content including the second text TG_2 and the third text TG_3. In this case, the at least one processor 150 may classify the input document ID as a second sub type to be described below. In an embodiment of the disclosure, when the target document TD includes content including text and images, the obtained input document ID may also include the content including text and images.

In this case, the at least one processor 150 may classify the input document ID as a second type to be described below. In an embodiment of the disclosure, when the target document TD includes content including scenes, the obtained input document ID may also include the content including scenes. In this case, the at least one processor 150 may classify the input document ID as a third type to be described below. In an embodiment of the disclosure, the operating method of the electronic apparatus 100 may include operation S200 of recognizing an element from the input document ID and then classifying a type of the input document ID based on the recognized element. The at least one processor 150 may recognize the element from the input document ID and then classify the type of the input document ID based on the recognized element. In an embodiment of the disclosure, operation S200 of classifying the type of the input document ID may include operation S210 of recognizing the element from the input document ID and operation S220 of classifying the type of the input document ID based on a kind of the recognized element. The at least one processor 150 may recognize the element from the input document ID.

The at least one processor 150 may classify the type of the input document ID based on the kind of the recognized element. In an embodiment of the disclosure, the at least one processor 150 may recognize the element from the input document ID by executing the element recognition module 142. The at least one processor 150 may classify the type of the input document ID based on a kind of the recognized element by executing the type classification module 143. In an embodiment of the disclosure, the operating method of the electronic apparatus 100 may include operation S300 of obtaining a calibration document by arranging recognized elements in a row according to an identified order according to the classified type of the input document ID.

In an embodiment of the disclosure, operation S300 of obtaining the calibration document may include identifying the order of elements based on the classified type of the input document ID and obtaining the calibration document by arranging the recognized elements in a row according to the identified order. In an embodiment of the disclosure, the at least one processor 150 may obtain the calibration document by arranging the recognized elements in a row according to the identified order based on the classified type of the input document ID.

In an embodiment of the disclosure, the at least one processor 150 may identify the order of the recognized elements based on the classified type of the input document ID. The at least one processor 150 may obtain the calibration document by arranging the recognized elements in a row according to the identified order. In an embodiment of the disclosure, the at least one processor 150 may execute the order identification module 145 to identify the order of recognized elements based on the classified type of the input document ID.

The at least one processor 150 may execute the calibration document obtaining module 146 to obtain the calibration document by arranging the recognized elements in a row according to the identified order. In an embodiment of the disclosure, the operating method of the electronic apparatus 100 includes operation S400 of displaying the obtained calibration document on the display 110.

In an embodiment of the disclosure, the at least one processor 150 may display the obtained calibration document on the display 110. In an embodiment of the disclosure, the at least one processor 150 may execute the method control module 147 to display the obtained calibration document on the display 110.

FIG. 6 is a flowchart for explaining an operating method of an electronic apparatus according to an embodiment of the disclosure. Operations S310 to S330 shown in FIG. 6 are operations embodying operation S300 shown in FIG. 4. Operations S310 and S320 shown in FIG. 6 may be performed after operation S200 of FIG. 4 is performed.

Referring to FIGS. 4 and 6, operation S300 of obtaining a calibration document includes operation S310 of identifying the order of recognized elements based on a classified type of the input document ID. Operation S300 of obtaining the calibration document includes operation S320 of obtaining calibration factors by calibrating the recognized elements.

Operation S300 of obtaining the calibration document includes operation S330 of obtaining the calibration document by arranging the calibration factors in a row according to the identified order. However, the disclosure is not limited thereto. Operation S300 of obtaining the calibration document may include operation S310 of identifying the order of recognized elements based on the classified type of the input document ID, and an operation of arranging the recognized elements in a row according to the identified order.

In an embodiment of the disclosure, the at least one processor 150 may obtain the calibration document by arranging the calibration factors in a row according to the identified order based on the classified type of the input document ID. The at least one processor 150 may identify the order of recognized elements based on the classified type of the input document ID. The at least one processor 150 may obtain calibration factors by calibrating the recognized elements.

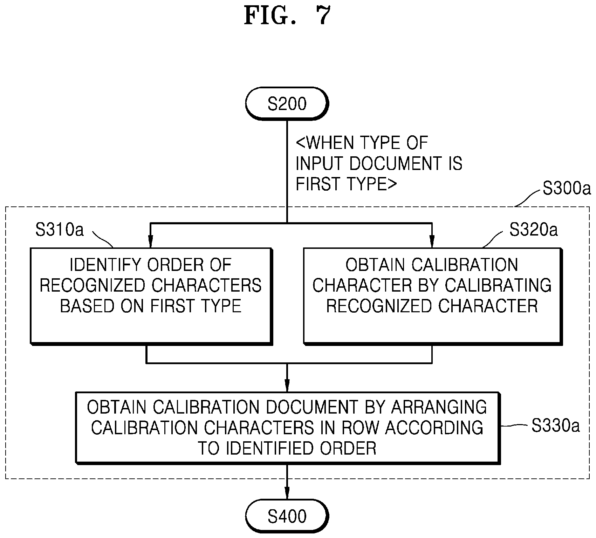

The at least one processor 150 may obtain the calibration document by arranging the calibration factors in a row according to the identified order. In an embodiment of the disclosure, the at least one processor 150 may execute the order identification module 145 to identify the order of recognized elements based on the classified type of the input document ID. The at least one processor 150 executes the calibration factor obtaining module 144 to calibrate recognized elements and obtain calibration factors. The at least one processor 150 executes the calibration document obtaining module 146 to arrange calibration factors in a row according to the identified order and obtain a calibration document. FIG. 7 is a flowchart for explaining an operating method of an electronic apparatus when an element includes a character according to an embodiment of the disclosure.

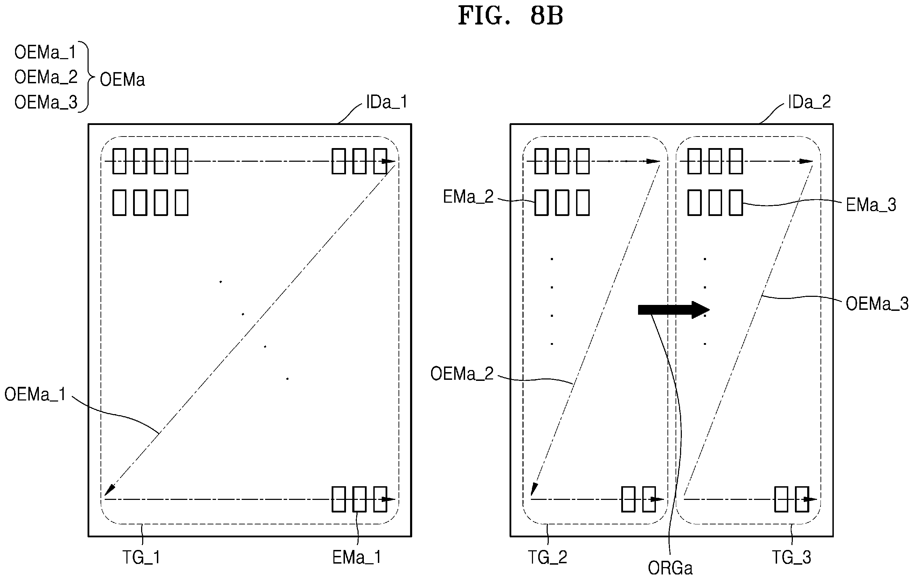

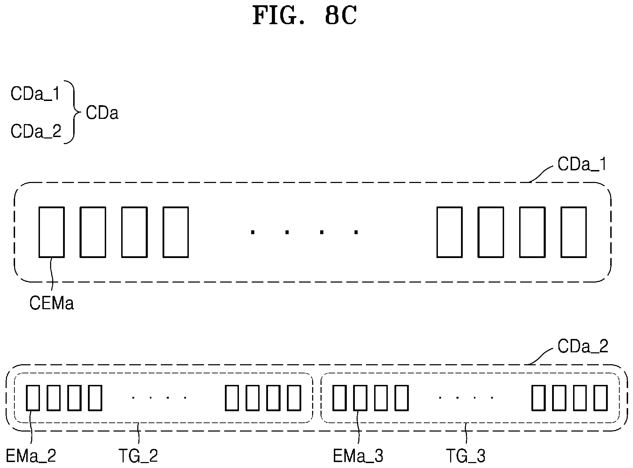

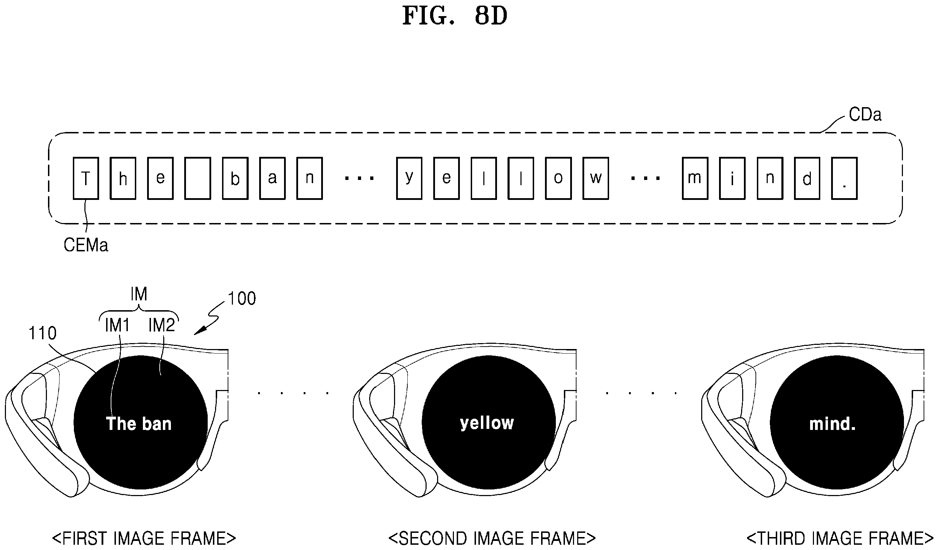

FIG. 8A is a diagram for explaining an operation of classifying a type of an input document based on a kind of an element according to an embodiment of the disclosure. FIG. 8B is a diagram for explaining an operation of identifying the order of elements based on the classified type of the input document according to an embodiment of the disclosure. FIG. 8C is a diagram for explaining obtaining a calibration document by arranging elements in a row according to the identified order according to an embodiment of the disclosure. FIG. 8D is a conceptual diagram for explaining a method of displaying the obtained calibration document on a display by arranging characters in a row according to an embodiment of the disclosure.

Operations S310a to S330a shown in FIG. 7 are operations embodying operation S300 shown in FIG. 4. Operations S310a and S320a shown in FIG. 7 may be performed after operation S200 of FIG. 4 is performed. Referring to FIGS. 4, 7, and 8A, in an embodiment of the disclosure, in operation S210 of recognizing an element, the at least one processor 150 (see FIG. 3) recognizes an element included in an obtained input document IDa.

In an embodiment of the disclosure, the at least one processor 150 may recognize a character EMa, which is the element included in the input document IDa, through optical character recognition (OCR). In an embodiment of the disclosure in operation S220 of classifying the type of the input document IDa, the at least one processor 150 may classify the type of the input document IDa as a first type when the element included in the input document IDa includes the character EMa. In an embodiment of the disclosure, the at least one processor 150 may classify the type of the input document IDa as the first type when the element included in the input document IDa includes only the character EMa and does not include an image. As an example of the disclosure, each element included in the input document IDa may correspond to one character EMa. Referring to FIGS. 7 and 8B, in an embodiment of the disclosure, the operating method of the electronic apparatus 100 may include operation S300a of obtaining a calibration document CDa by arranging recognized characters EMa in a row according to an identified order based on the first type. In an embodiment of the disclosure, operation S300a of obtaining the calibration document CDa may include operation S310a of identifying an order OEMa in which the recognized characters EMa are arranged based on the first type. Operation S300a of obtaining the calibration document CDa may include operation S320a of obtaining a calibration character CEMa by calibrating a recognized character EMa.

Operation S300a of obtaining the calibration document CDa may include operation S330a of obtaining the calibration document CDa by arranging the calibration characters CEMa in a row according to the identified order OEMa. In an embodiment of the disclosure, in operation S310a of identifying the order OEMa in which the recognized characters EMa are arranged, the at least one processor 150 may identify the order OEMa in which the recognized characters EMa are arranged, based on the input document IDa being of the first type including characters as elements.

The at least one processor 150 may identify the order OEMa in which the recognized characters EMa are arranged based on content of the recognized characters EMa and spaces between the plurality of recognized characters EMa. In an embodiment of the disclosure, the at least one processor 150 may analyze the content of the recognized characters EMa, and identify the order OEMa in which the recognized characters EMa are arranged based on the analyzed content. The at least one processor 150 may determine locations such as spacing, line break, etc. between the plurality of recognized characters EMa based on the spaces between the plurality of recognized characters EMa, and identify the order OEMa in which the recognized characters EMa are arranged based on the determined locations.

FIG. 8B shows that the order OEMa of the recognized characters EMa is identified from left to right in a horizontal direction and from top to bottom in a vertical direction. However, the disclosure is not limited thereto, and the identified order OEMa of the recognized characters EMa may vary depending on the content included in the input document IDa. Referring to FIGS. 7, 8B, and 8C, in an embodiment of the disclosure, in operation S320a of generating the calibration character CEMa by calibrating the recognized character EMa, the at least one processor 150 may generate the calibration character CEMa by calibrating the recognized character EMa. FIG. 8C shows that the size of the calibration character CEMa is larger than the size of the corresponding recognized character EMa by magnifying the recognized character EMa, the disclosure is not limited thereto.

The at least one processor 150 may obtain the calibration character CEMa by de-magnifying the recognized character EMa or calibrating the recognized character EMa through color inversion such as negative color. Referring to FIGS. 7, 8B, and 8C, in an embodiment of the disclosure, in operation S330a of obtaining the calibration document CDa, the at least one processor 150 may obtain the calibration document CDa by arranging the calibration characters CEMa in a row according to the identified order OEMa. In an embodiment of the disclosure, the characters EMa are arranged in a plurality of rows and a plurality of columns in an input document IDa_1. The at least one processor 150 may obtain the calibration document CDa by identifying the order OEMa of documents listed in the input document IDa, and arranging the calibration characters CEMa in a row according to the identified order OEMa.

Referring to FIGS. 7 and 8D, in an embodiment of the disclosure, in an operation of displaying the calibration document CDa on the display 110, the at least one processor 150 may display a part of the obtained calibration document CDa on the display 110. In an embodiment of the disclosure, when the calibration character CEMa included in the calibration document CDa is a magnification of the recognized character EMa, the size of a character displayed on the display 110 may be larger than the size of a character included the target document TD (see FIG. 5).

Accordingly, visibility of the user US may be improved when viewing the character displayed on the display 110 compared to when the target document TD is viewed directly with the eyes. In addition, the calibration character CEMa included in the calibration document CDa may be calibrated by negative color inversion of the recognized character EMa. In an embodiment of the disclosure, FIG. 8D shows that the output image IM includes a first output image IM1 and a second output image IM2.

The first output image IM1 is an image corresponding to the calibration character CEMa.

The second output image IM2 may be a background image of the first output image IM1. The electronic apparatus 100 may perform color inversion such that a gray level of the first output image IM1 is higher than a gray level of the second output image IM2 through negative color inversion.

The visibility of the user US may be improved when viewing the output image IM provided by the electronic apparatus 100 compared to when the target document TD is viewed directly with the eyes.

However, the disclosure is not limited thereto. In an embodiment of the disclosure, the calibration character CEMa included in the calibration document CDa may be calibrated by de-magnification of the recognized text EMa.

In this case, the size of character displayed on the display 110 may be smaller than the size of character included in the target document TD. Accordingly, the number of characters entering the field of view of the user US may increase when viewing characters displayed on the display 110 compared to when the target document TD is viewed directly with the eyes. In an embodiment of the disclosure, the output image IM may include a part of the calibration document CDa. In an embodiment of the disclosure, when a period for providing the output images IM corresponding to all of the calibration document CDa to the user US through the electronic apparatus 100 is referred to as an image period, the electronic apparatus 100 sequentially displays the output images IM including a part of the calibration document CDa to the user US during a plurality of image frames included in the image period. In an embodiment of the disclosure, the electronic apparatus 100 displays the output image IM including a beginning part of the calibration document CDa on the display 110 for one image frame. The electronic apparatus 100 displays, on the display 110 during a next image frame, the output image IM including a next part of the beginning part of the calibration document CDa included in the output image IM of a previous image frame.

The electronic apparatus 100 may display the output image IM including a last part of the calibration document CDa on the display 110 by repeating such a process during the image period. Referring to FIGS. 7 and 8D, the electronic apparatus 100 displays the output image IM including "The ban", which is the beginning part of the calibration document CDa, on the display 110 in a first image frame. The electronic apparatus 100 displays the output image IM including "yellow", which is a next part of "The ban" of the calibration document CDa, on the display 110 in a second image frame, which is a frame after the first image frame. The electronic apparatus 100 displays the output image IM including "mind.", which is a next part of "yellow" of the calibration document CDa, on the display 110 in a third image frame, which is a frame after the second image frame.

However, the disclosure is not limited thereto. The number and size of the calibration characters CEMa displayed on the display 110 may vary depending on a degree of magnifying the recognized character EMa.

As the degree of magnifying the recognized character EMa increases, the number of calibration characters CEMa displayed on the display 110 decreases, and the size of the calibration character CEMa may increase. In this case, the visibility of the user US (see FIG. 1) may increase. In an embodiment of the disclosure, the characters EMa are arranged in a plurality of rows in the target document TD and the input document IDa.

Therefore, when the user US directly views the target document TD or when the input document IDa is provided to the user US, the user US needs to move his/her eye sight upwards or downwards, and understand content of the target document TD or the input document IDa. In an embodiment of the disclosure, when the content included in the target document TD or the input document IDa continues from one line of the character EMa to a next line, the user US needs to move his/her eye sight from the right end of a previous row to the bottom left of the next row. Accordingly, the user US needs to move his/her eye sight downward as well as leftward.

At this time, when the eye sight of the user US moves downward to a row beyond the next row, it may be difficult for the user US to understand the content of contents. In addition, this problem may also occur when the output image IM including a character obtained by magnifying the character EMa included in the target document TD or the input document IDa is provided to the user US in order to improve the visibility of the user US. When the output image IM including the magnified character is provided to the user US, the number of characters that may be included in the output image IM is reduced because the size of the magnified character is large. Accordingly, it may be difficult for the user US to determine whether the eye sight has moved to a desired row when moving upward or downward based on the content of peripheral characters, and it may be difficult for the user US to move the eye sight to the desired row.

In an embodiment of the disclosure, the calibration characters CEMa included in the calibration document CDa are arranged in a row according to the identified order OEMa (see FIG. 8B). The order of the calibration characters CEMa sequentially displayed on the display 110 by the electronic apparatus 100 is the same as order of the characters EMa included in the target document TD (see FIG. 5) and the input document IDa (see FIG. 8A).

In an embodiment of the disclosure, the output image IM displayed by the electronic apparatus 100 includes the calibration characters CEMa arranged in a row. The user US who views the output image IM provided by the electronic apparatus 100 does not need to move his/her eye sight upward or downward to understand the content of contents. Accordingly, when viewing the output image IM provided by the electronic apparatus 100, the visibility of the user US may be improved.

Referring to FIGS. 7 and 8A, in an embodiment of the disclosure, the input document IDa may include a first text document IDa_1 including content including the first text TG_1 and a second text document IDa_2 including the second text TG_2 and the third text TG_3. In an embodiment of the disclosure, the first text TG_1 includes a plurality of first characters EMa_1. The first text TG_1 is text in which the plurality of first characters EMa_1 are sequentially arranged in accordance with the content order of contents.

The second text TG_2 includes at least one second character EMa_2. The second text TG_2 is text in which a plurality of second characters EMa_2 are sequentially arranged in accordance with the content order of contents. The third text TG3 includes at least one third character EMa_3. The third text TG_3 is text in which a plurality of third characters EMa_3 are sequentially arranged in accordance with the content order of contents. Hereinafter, for convenience of description, the first text document IDa_1 is defined as the input document IDa of a first sub type, and the second text document IDa_2 is defined as the input document IDa of a second sub type.

In an embodiment of the disclosure, in operation S210 of recognizing the element, the at least one processor 150 recognizes the plurality of characters EMa_1, EMa_2, and EMa_3 included in the obtained input document IDa of the first sub type or the obtained input document IDa of the second sub type. In an embodiment of the disclosure, the operating method of the electronic apparatus 100 may further include an operation of classifying the type of the input document IDa as the first sub type or the second sub type based on the arrangement of the plurality of recognized characters EMa_1, EMa_2, and EMa_3. In an embodiment of the disclosure, when a space between the plurality of recognized characters EMa_1, EMa_2, and EMa_3 remains constant to be larger than a preset space, the at least one processor 150 may classify the input document IDa as the second sub type including the second text TG_2 and the third text TG_3 which are distinguished from each other. When the space between the plurality of recognized characters EMa_1, EMa_2, and EMa_3 is smaller than the preset space, the at least one processor 150 may classify the input document IDa as the first sub type including the first text TG_1. In this regard, the preset space may be a space corresponding to a spacing between two adjacent characters. FIG. 8A shows that the input document IDa_2 of the second sub type includes the second text TG_2 and the third text TG_3 divided in the horizontal direction, but the disclosure is not limited thereto. The input document IDa_2 of the second sub type may include two texts divided in the vertical direction.

Also, the input document IDa may include other sub types including three or more texts.

Referring to FIGS. 7 and 8B, in an embodiment of the disclosure, operation S300a of obtaining the calibration document CDa may further include recognizing the order of the plurality of recognized characters EMa_1, EMa_2, and EMa_3 based on one of the first sub type or the second sub type.

In an embodiment of the disclosure, when the type of the input document IDa is classified as the first sub type, the at least one processor 150 may identify an order OEMa_1 of the plurality of first characters EMa_1 based on content or space of each of the plurality of first characters EMa_1 included in the first text TG_1. In an embodiment of the disclosure, when the type of the input document IDa is classified as the second sub type, the at least one processor 150 may identify an order ORGa of the second text TG_2 and the third text TG_3 based on content of each of the plurality of second characters EMa_2 included in the second text TG_2 and content of each of the plurality of third characters EMa_3 included in the third text TG_3. After identifying the order ORGa of the second text TG_2 and the third text TG_3, the at least one processor 150 may identify an order OEMa_2 of the plurality of second characters EMa_2 based on the content or space of the plurality of second characters EMa_2 included in the second text TG_2. After identifying the order ORGa of the second text TG_2 and the third text TG_3, the at least one processor 150 may identify an order OEMa_3 of the plurality of third characters EMa_3 based on the content or space of the plurality of third characters EMa_3 included in the third text TG_3.

However, in an embodiment of the disclosure, the at least one processor 150 may also identify the order ORGa of the second text TG_2 and the third text TG_3, the order OEMa_2 of the plurality of second characters EMa_2, and the order OEMa_3 of the plurality of third characters EMa_3 together. Referring to FIGS. 7, 8B, and 8C, in an embodiment of the disclosure, operation S330a of obtaining the calibration document CDa may include obtaining the calibration document CDa by arranging the plurality of recognized characters EMa_1, EMa_2, and EMa_3 in a row according to the identified order OEMa based on any one sub type of the first sub type or the second sub type. In an embodiment of the disclosure, when the input document IDa_1 is classified as the first sub type and the order OEMa_1 of the plurality of first characters EMa_1 is identified based on the first sub type, the at least one processor 150 may obtain a first sub calibration document CDa_1 by arranging the plurality of first characters EMa_1 in a row according to the identified order OEMa_1.

In an embodiment of the disclosure, when the input document IDa_1 is classified as the second sub type, and the order ORGa of the second text TG_2 and the third text TG_3, the order OEMa_2 of the plurality of second characters EMa_2, and the order OEMa_3 of the plurality of third characters EMa_3 are identified based on the second sub type, the at least one processor 150 may obtain a second sub calibration document CDa_2 by respectively arranging the plurality of second characters EMa_2 and the plurality of third characters EMa_3 in a row according to the identified orders ORGa, OEMa_2, and OEMa_3.

In an embodiment of the disclosure, the arrangement order of the plurality of second characters EMa_2 and the plurality of third characters EMa_3 included in the second sub calibration document CDa_2 may correspond to the order ORGa of the second text TG_2 and the third text TG_3.

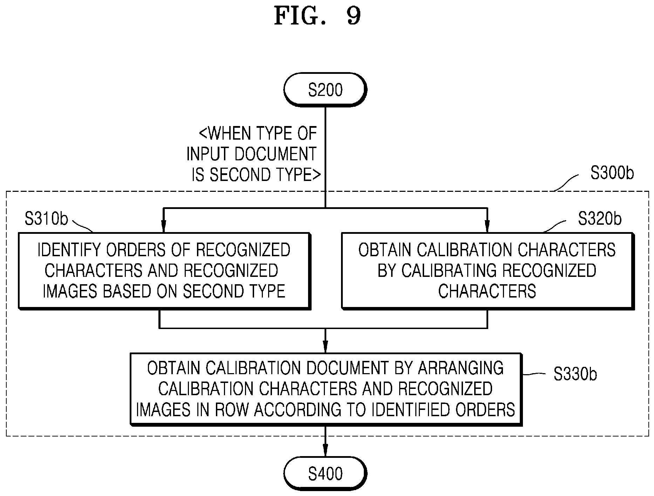

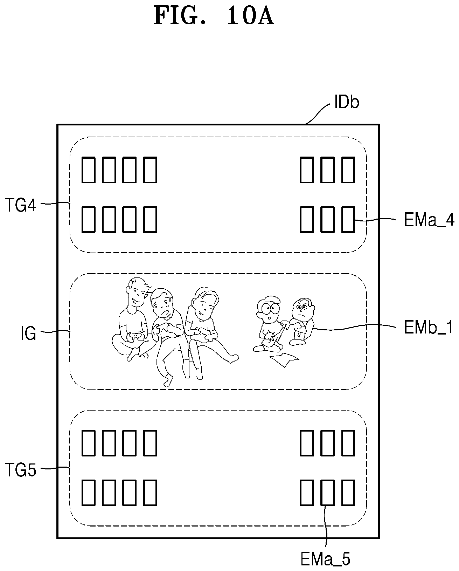

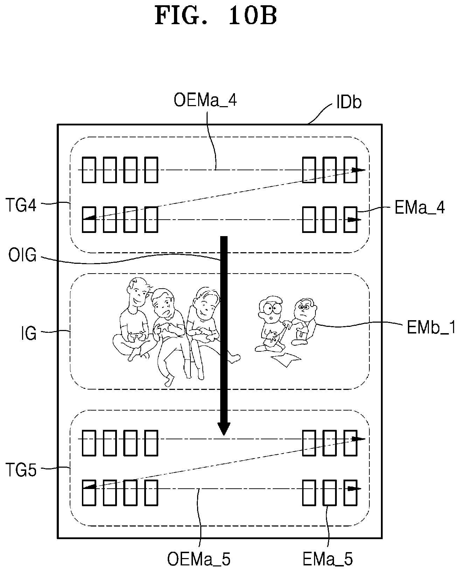

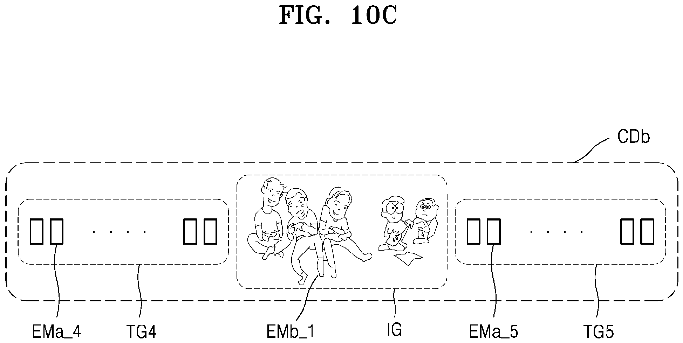

FIG. 9 is a flowchart for explaining an operating method of an electronic apparatus when elements include characters and images according to an embodiment of the disclosure. FIG. 10A is a diagram for explaining an operation of classifying a type of an input document based on a kind of an element according to an embodiment of the disclosure. FIG. 10B is a diagram for explaining an operation of identifying an order of elements based on the classified type of the input document according to an embodiment of the disclosure. FIG. 10C is a diagram for explaining obtaining a calibration document by arranging elements in a row according to the identified order according to an embodiment of the disclosure.

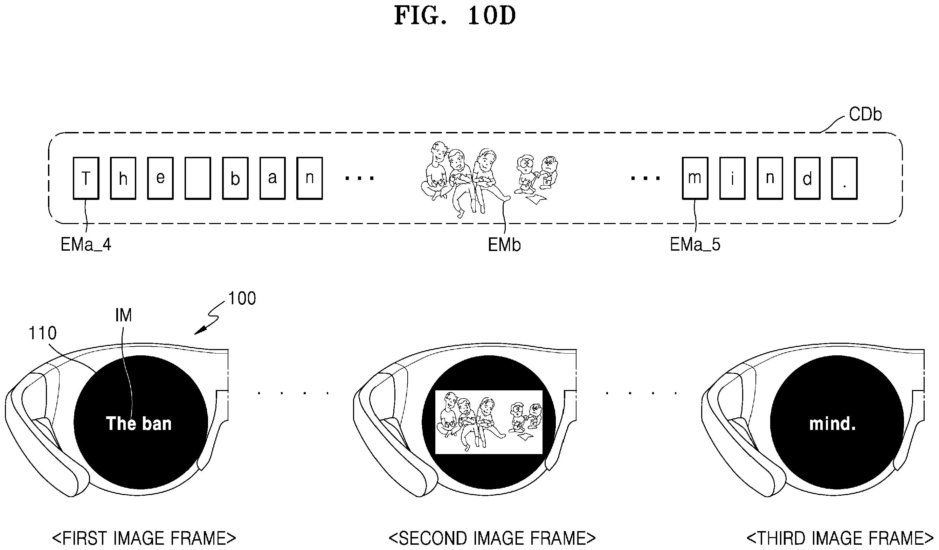

FIG. 10D is a conceptual diagram for explaining a method of displaying the calibration document obtained by arranging characters and images in a row on a display according to an embodiment of the disclosure.

Hereinafter, the same operations as those described with reference to FIG. 4 are denoted by the same reference numerals, and descriptions thereof are omitted.

Referring to FIGS. 9 and 10A, in operation S210 (see FIG. 4) of recognizing the element in an embodiment of the disclosure, the at least one processor 150 (see FIG. 3) recognizes elements included in the obtained input document IDb. In an embodiment of the disclosure, the at least one processor 150 may recognize characters and images included in the input document IDb as elements.

In an embodiment of the disclosure, the at least one processor 150 may recognize a plurality of characters EMa_4 and EMa_5 included in the input document IDb by performing OCR. In an embodiment of the disclosure, the at least one processor 150 may recognize areas TG4 and TG5 in which the plurality of characters EMa_4 and EMa_5 are disposed and an area IG in which the plurality of characters EMa_4 and EMa_5 are not disposed. In an embodiment of the disclosure, when the area IG in which the plurality of characters EMa_4 and EMa_5 are not disposed includes specific data other than characters, the at least one processor 150 may recognize that a first image EMb_1 is disposed in the corresponding area IG. In an embodiment of the disclosure, the at least one processor 150 may recognize the specific data disposed in the corresponding area IG as the first image EMb_1. In an embodiment of the disclosure, the plurality of characters EMa_4 and EMa_5 include at least one fourth character EMa_4 and at least one fifth character EMa_5.

An area in which the at least one fourth character EMa_4 is disposed may be referred to as the fourth text TG4.

An area in which the at least one fifth character EMa_5 is disposed may be referred to as the fifth text TG5. An area in which the fourth and fifth characters EMa_4 and EMa_5 are not disposed may be referred to as the image area IG.

In an embodiment of the disclosure, in operation S220 of classifying the type of the input document ID, when the elements included in the input document IDb include the characters EMa_4 and EMa_5 and the image EMb_1, the at least one processor 150 may classify the type of the input document IDb as a second type. In an embodiment of the disclosure, the at least one processor 150 may classify the type of the input document IDb as the second type when the input document IDb includes text and image areas. In an embodiment of the disclosure, the at least one processor 150 may classify the input document IDb including the fourth characters EMa_4, the fifth characters EMa_5, and the first image EMb_1 shown in FIG. 10A as the second type. FIG. 10A shows that the input document IDb includes the two texts TG4 and TG5 and one image area IG, but the disclosure is not limited thereto.

The input document IDb may include at least one text and at least one image area. The at least one processor 150 may classify an input document as the second type even when the input document includes at least one text and at least one image area. Referring to FIGS. 9 and 10B, the operating method of the electronic apparatus 100 according to an embodiment of the disclosure may include operation S300b of obtaining a calibration document CDb (see FIG. 10C) by arranging the recognized characters EMa_4 and EMa_5 and the recognized image EMb_1 in a row according to an identified order based on the second type. In an embodiment of the disclosure, operation S300b of obtaining the calibration document CDb may include operation S310b of identifying orders OEMa_4 and OEMa_5 of the recognized characters EMa_4 and EMa_5 and an order OIG of the recognized images EMb_1 based on the second type.

In an embodiment of the disclosure, operation S300b of obtaining the calibration document CDb may include operation S320b of obtaining calibration characters by calibrating the recognized characters EMa_4 and EMa_5. In an embodiment of the disclosure, in operation S310b of identifying the orders OEMa_4 and OEMa_5 of the recognized characters EMa_4 and EMa_5 and the order OIG of the recognized first image EMb_1 based on the second type, the at least one processor 150 may identify an order between the recognized characters EMa_4 and EMa_5 and the recognized first image EMb_1 based on the input document IDb being of the second type. In an embodiment of the disclosure, the at least one processor 150 may identify an order of the fourth text TG4, the fifth text TG5, and the image area IG through an arrangement of the fourth text TG4 and the fifth text TG5 recognized as characters and the image area IG.

In an embodiment of the disclosure, an order of contents included in the input document IDb may be identified as the order of the fourth text TG4, the image area IG, and the fifth text TG5. Based on this, the at least one processor 150 may identify the order OIG of the first image EMb_1 in the input document IDb. In an embodiment of the disclosure, the at least one processor 150 may identify the order OEMa_4 of the fourth characters EMa_4 in the fourth text TG4 and the order OEMa_5 of the fifth characters EMa_5 in the fifth text TG5.

The at least one processor 150 may identify the order OEMa_4 of the recognized fourth character EMa_4 based on the content or space of the recognized fourth characters EMa_4. The at least one processor 150 may identify the order OEMa_5 of the recognized fifth character EMa_5 based on the content or space of the recognized fifth characters EMa_5. In an embodiment of the disclosure, in operation S320b of obtaining the calibration characters, the at least one processor 150 may obtain the calibration characters by calibrating the recognized fourth character EMa_4 and the recognized fifth character EMa_5.

In an embodiment of the disclosure, the at least one processor 150 may store the recognized first image EMb_1 as the original. However, the disclosure is not limited thereto, and the at least one processor 150 may obtain a calibration image by magnifying or de-magnifying the recognized first image EMb_1.

Referring to FIGS. 9 and 10C, in an embodiment of the disclosure, operation S300b of obtaining the calibration document CDb may include operation S330b of obtaining the calibration document CDb by arranging the recognized characters EMa_4 and EMa_5 and the image area IG in a row according to the identified orders OEMa_4, OEMa_5, and OIG. The disclosure is not limited thereto, and in operation S300b of obtaining the calibration document CDb, the at least one processor 150 may obtain the calibration document CDb by arranging the calibration characters and the recognized image area IG in a row according to the identified orders OEMa_4, OEMa_5, and OIG.

In this case, the calibration document CDb may include the image area IG recognized as the original. In an embodiment of the disclosure, FIG. 10C shows the calibration documents CDb in which the recognized fourth character EMa_4, the recognized fifth character EMa_5, and the recognized image region IG are arranged in a row according to the identified orders OEMa_4, OEMa_5, and OIG (see FIG.10B). The disclosure is not limited thereto, and the calibration document CDb may include calibration characters and calibration images calibrated through magnification, de-magnification, or color inversion.

Also, the calibration document CDb may include characters calibrated through color inversion and images not calibrated through color inversion. Referring to FIGS. 9 and 10D, the electronic apparatus 100 displays the output image IM including "The ban", which is the beginning part of the calibration document CDb, on the display 110 in a first image frame. In an embodiment of the disclosure, "The ban" may correspond to the fourth character EMa_4 included in the fourth text TG4.

The electronic apparatus 100 displays the output image IM including the first image EMb_1, which is a next part of "The ban" of the calibration document CDb, on the display 110 in a second image frame, which is a frame after the first image frame.

In an embodiment of the disclosure, the first image EMb_1 may correspond to the first image EMb_1 included in the image area IG. The electronic apparatus 100 displays the output image IM including "mind.", which is a next part of an image EMb of the calibration document CDb, on the display 110 in a third image frame, which is a frame after the second image frame.

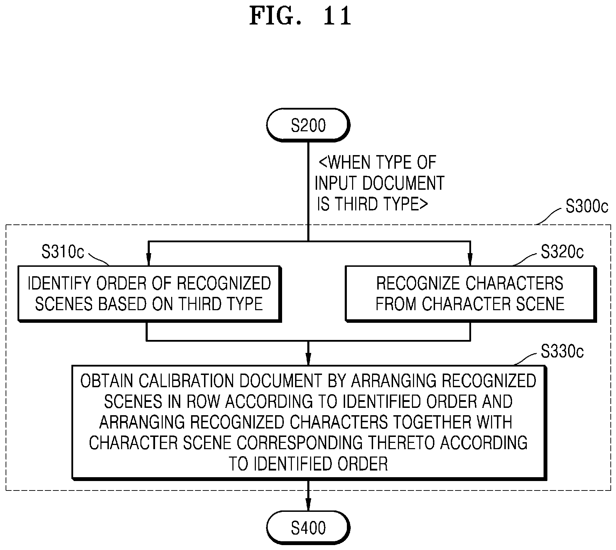

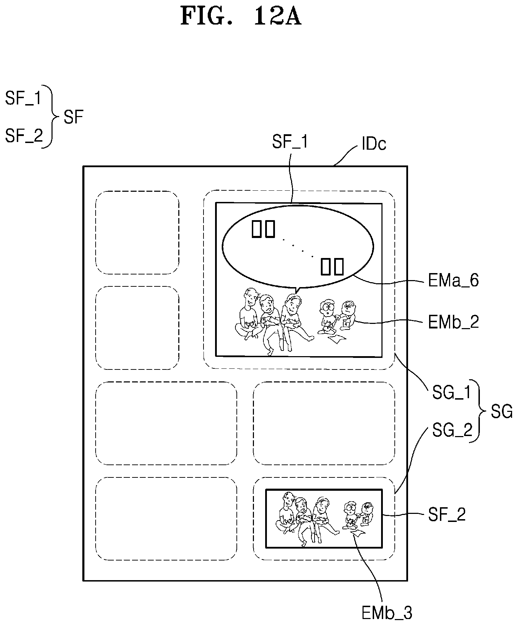

In an embodiment of the disclosure, "mind." may correspond to the fifth character EMa_5 included in the fifth text TG5. FIG. 11 is a flowchart for explaining an operating method of an electronic apparatus when an element includes a scene according to an embodiment of the disclosure. FIG. 12A is a diagram for explaining an operation of classifying a type of an input document based on a kind of an element according to an embodiment of the disclosure.

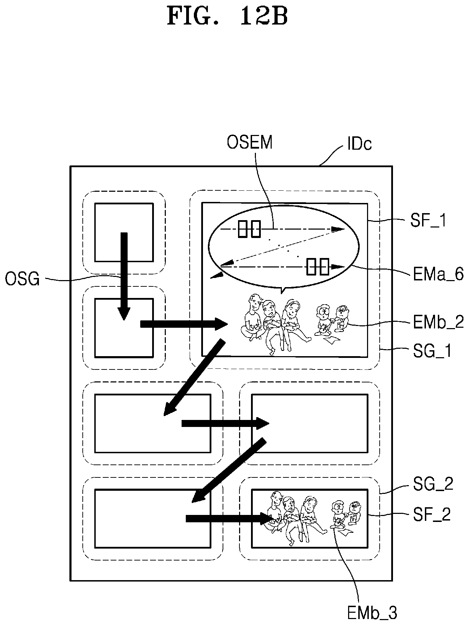

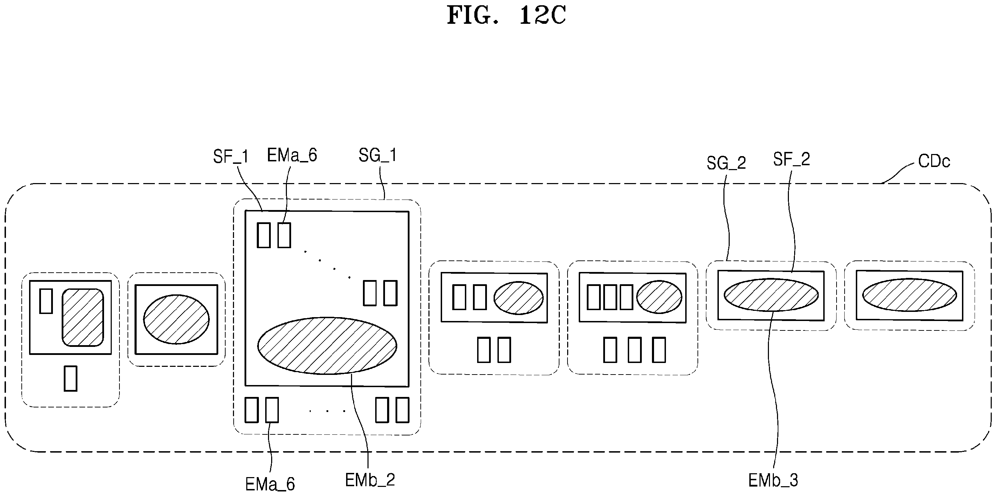

FIG. 12B is a diagram for explaining an operation of identifying an order of elements based on the classified type of the input document according to an embodiment of the disclosure. FIG. 12C is a diagram for explaining obtaining a calibration document by arranging elements in a row according to the identified order according to an embodiment of the disclosure.

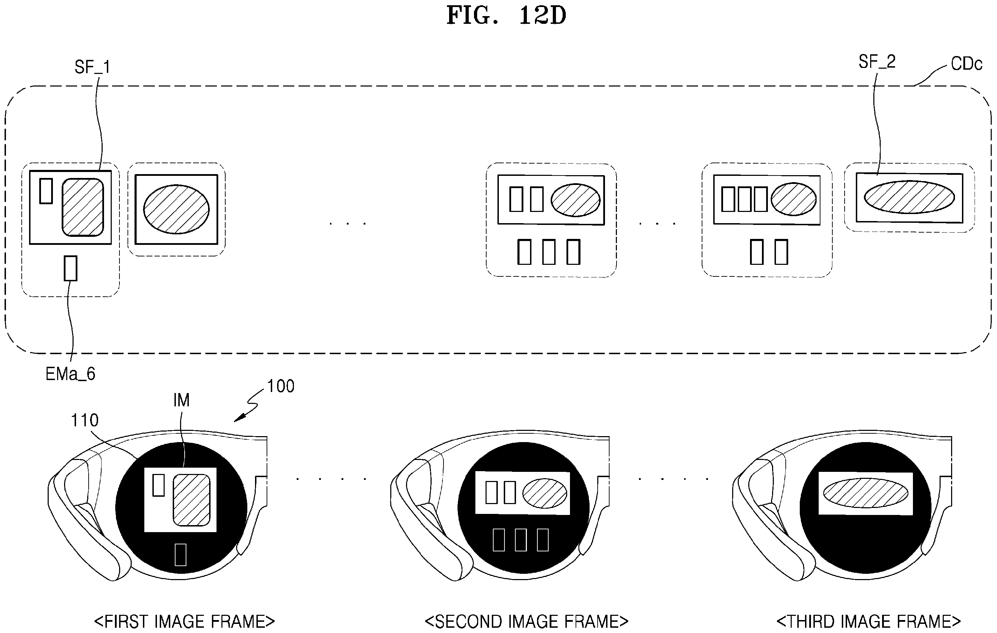

FIG. 12D is a conceptual diagram for explaining a method of displaying an output image including the calibration document obtained by arranging scenes in a row on a display according to an embodiment of the disclosure. Hereinafter, the same operations as those described with reference to FIG. 4 are denoted by the same reference numerals, and descriptions thereof are omitted.

Referring to FIGS. 11 and 12A, in operation S210 of recognizing the element in an embodiment of the disclosure, the at least one processor 150 (see FIG. 3) recognizes elements included in the obtained input document IDc. In an embodiment of the disclosure, the at least one processor 150 may recognize scenes SF_1 and SF_2 including at least one of characters or images included in the input document IDc as elements.

The scene may be an element included in comics, cartoon, webtoon, etc. In an embodiment of the disclosure, the scene may be referred to as a column or a cut included in comics, cartoon, webtoon, etc. In an embodiment of the disclosure, the at least one processor 150 may recognize areas including at least one of characters or images and surrounded by a line having a specific shape as the scenes SF_1 and SF_2. In an embodiment of the disclosure, the at least one processor 150 may recognize areas including at least one of characters or images and surrounded by a line having a rectangular shape as the scenes SF_1 and SF_2. However, the disclosure is not limited thereto, and the at least one processor 150 may recognize areas including at least one of characters or images and surrounded by a line having a circular shape as the scenes SF_1 and SF_2.

In addition, the at least one processor 150 may respectively recognize areas SG_1 and SG_2 each including at least one of characters or images and spaced apart from peripheral areas by a preset distance or more as the scenes SF_1 and SF_2.

The at least one processor 150 may respectively recognize the areas SG_1 and SG_2 each including at least one of characters or images and surrounded by a blank area not including data as the scenes SF_1 and SF_2. In an embodiment of the disclosure, the scenes SF_1 and SF_2 include a character scene SF_1 including a sixth character EMa_6 and a non-character scene SF_2 including no character. FIG. 12A shows that the character scene SF_1 includes a plurality of sixth characters EMa_6 and one second image EMb_2, but the disclosure is not limited thereto. The character scene SF_1 may include only characters.

Also, the character scene SF_1 may include a plurality of images. FIG. 12A shows that the non-character scene SF_2 includes one third image EMb_3, but the disclosure is not limited thereto. The non-character scene SF_2 may include a plurality of images.

In an embodiment of the disclosure, the at least one processor 150 may recognize the character scene area SG_1 corresponding to the character scene SF_1 and the non-character scene area SG_2 corresponding to the non-character scene SF_2 as the elements of the input document IDc. Also, the disclosure is not limited thereto, and a scene SF may include only the at least one non-character scene SF_2.

In an embodiment of the disclosure, in operation S220 of classifying a type of the input document IDc, the at least one processor 150 may classify the type of the input document IDc as a third type when the elements included in the input document IDc include the scenes SF_1 and SF_2. In an embodiment of the disclosure, the at least one processor 150 may classify the input document IDc shown in FIG. 12A as the third type. Referring to FIGS. 11 and 12B, in an embodiment of the disclosure, the operating method of the electronic apparatus 100 may include operation S300c of obtaining a calibration document CDc (see FIG. 12C) by arranging the recognized scenes SF_1 and SF_2 in a row according to an identified order based on the third type. In an embodiment of the disclosure, operation S300c of obtaining the calibration document CDc may include operation S310c of identifying an order OSG of the recognized scenes SF_1 and SF_2 based on the third type. In an embodiment of the disclosure, operation S300c of obtaining the calibration document CDc may include operation S320c of recognizing the sixth character EMa_6 from the character scene SF_1. In an embodiment of the disclosure, operation S300c of obtaining the calibration document CDc may further include obtaining calibration characters by calibrating the recognized sixth characters EMa_6. In an embodiment of the disclosure, in operation S310c of identifying the order OSG of the recognized scenes SF_1 and SF_2, the at least one processor 150 may identify the order OSG of the recognized scenes SF_1 and SF_2 based on the input document IDc being of the third type. In an embodiment of the disclosure, when the input document IDc is classified as the third type, the at least one processor 150 may identify the order OSG of the recognized scenes SF_1 and SF_2 based on the fact that the input document IDc includes at least one scene, and the content included in the input document IDc continues from one scene to another scene.

The at least one processor 150 may identify the order OSG of the recognized scenes SF_1 and SF_2 based on the content of the sixth characters EMa_6 included in the character scene SF_1, the second image EMb_2 included in the character scene SF_1, and the third image EMb_3 included in the non-character scene SF_2. FIG. 12B shows the order OSG that the recognized scenes SF_1 and SF_2 are alternately arranged from upper left to lower right, but the disclosure is not limited thereto.

The order of the recognized scenes may be alternately arranged from upper right to lower left, or from top to bottom, or from left to right, and is not limited to either one. In an embodiment of the disclosure, in operation S320c of recognizing the sixth characters EMa_6 from the character scene SF_1, the at least one processor 150 may perform OCR to recognize the sixth characters EMa_6 included in the character scene SF_1, and identify an order OSEM of the recognized sixth characters EMa_6 based on the content or space of the recognized sixth characters EMa_6. Referring to FIGS. 11 and 12C, in an embodiment of the disclosure, operation S300c of obtaining the calibration document CDc may further include operation S330c of obtaining the calibration document CDc by arranging the recognized scenes SF_1 and SF_2 according to the identified order OSG (see FIG. 12B) in a row. In an embodiment of the disclosure, in operation S330c of obtaining the calibration document CDc, the at least one processor 150 may obtain the calibration document CDc by arranging the recognized scenes SF_1 and SF_2 in a row according to the identified scene order OSG, and arranging the recognized sixth characters EMa_6 together with the character scene SF_1 corresponding thereto according to the identified order OSEM (see FIG. 12B) of the sixth characters EMa_6.

FIG. 12C shows that the character scene SF_1 and the non-character scene SF_2 are arranged in a row according to the identified order OSG, and the sixth characters EMa_6 recognized from the character scene SF_1 are arranged together in a row at the lower end of the character scene SF_1 corresponding thereto. However, the disclosure is not limited thereto, and the calibration document CDc may be obtained by arranging the character scene SF_1 and the non-character scene SF_2 in a row according to the identified order OSG. Also, the sixth characters EMa_6 may be arranged at the side surface or the upper end of the character scene SF_1 corresponding thereto.

Referring to FIGS. 11 and 12D, the electronic apparatus 100 displays the output image IM including a scene located at a beginning part of the calibration document CDc on the display 110 in a first image frame. In an embodiment of the disclosure, when the scene included in the first image frame is the character scene SF_1, the electronic apparatus 100 displays the output image IM including the character scene SF_1 and the sixth character EMa_6 corresponding to the character scene SF_1.

The electronic apparatus 100 displays the output image IM including a scene after the character scene SF_1 included in the output image IM displayed on the first image frame of the calibration document CDc on the display 110 in a second image frame, which is a frame after the first image frame.

The electronic apparatus 100 displays the output image IM including a scene after the scene included in the output image IM displayed on the second image frame of the calibration document CDc on the display 110 in a third image frame, which is a frame after the second image frame. In an embodiment of the disclosure, when the scene included in the third image frame is the non-character scene SF_2, the electronic apparatus 100 displays the output image IM including the non-character scene SF_2.

In an embodiment of the disclosure, the electronic apparatus 100 sequentially provides the target document TD (see FIG. 5) and the scene SF included in the input document IDc (FIG. 12A) according to the identified order OSG to the user US (see FIG. 1). Therefore, the user US viewing the output image IM provided by the electronic apparatus 100 does not need to search for the order of the scenes SF in order to understand contents of the content. Accordingly, visibility and convenience of the user US viewing the output image IM provided by the electronic apparatus 100 may be improved.

In addition, when an output image including a magnified scene of the scene SF included in the target document TD or the input document IDa is simply provided to the user US in order to improve the visibility of the user US, it is difficult for the user US to understand the contents of peripheral scenes, making it difficult to search for the order of the scenes SF suitable for contents of the content. Unlike this, in the disclosure, a calibration document in which the recognized scenes SF are magnified and calibrated and arranged in a row in accordance with the order is provided to the user US.

Therefore, the magnified scenes SF may be provided to the user US, and the user US does not need to search for the order of the scenes SF, and thus, the visibility and convenience of the user US may be improved.

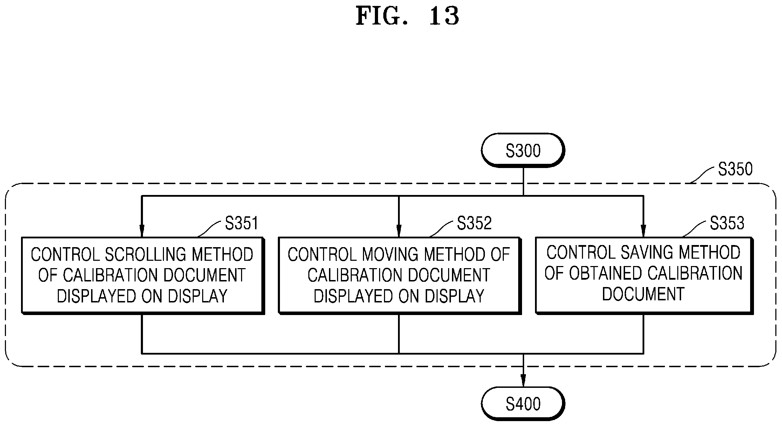

FIG. 13 is a diagram for explaining a method of controlling an obtained calibration document according to an embodiment of the disclosure. Referring to FIGS. 2, 4, and 13, the operating method of the electronic apparatus 100 may further include operation S350 of controlling the obtained calibration document after operation S300 of obtaining the calibration document.

In an embodiment of the disclosure, operation S350 of controlling the obtained calibration document may include operation S351 of controlling a scrolling method of the calibration document displayed on a display. Operation S350 of controlling the obtained calibration document may include operation S352 of controlling a moving method of the calibration document displayed on the display. Operation S350 of controlling the obtained calibration document may include operation S353 of controlling a saving method of the obtained calibration document.

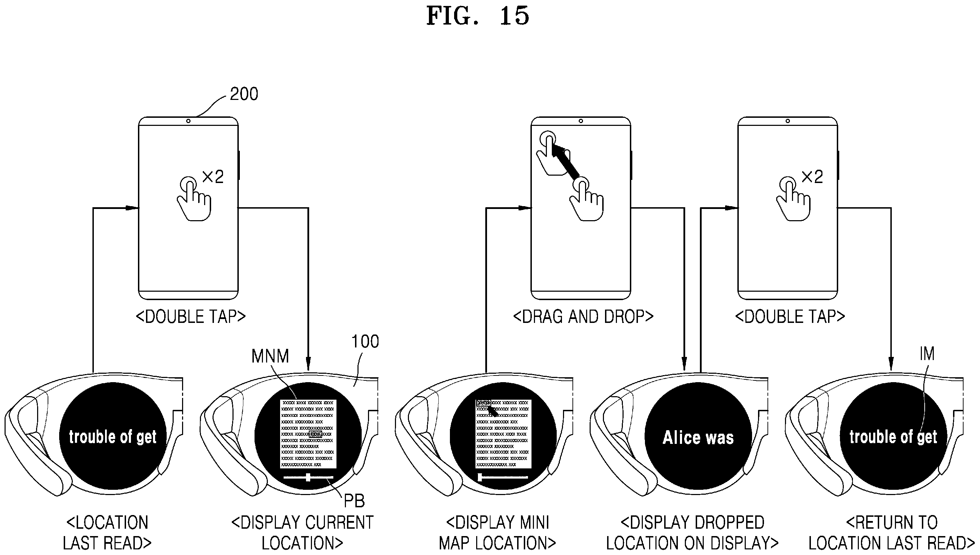

Hereinafter, operations S351, S352, and S353 are described below with reference to FIGS. 14 and 15.

FIG. 14 is a conceptual diagram for explaining a method of controlling a scrolling method of a calibration document displayed on a display according to an embodiment of the disclosure. FIG. 14 shows that the operation of the electronic apparatus 100 is controlled by using the external electronic apparatus 200.

In an embodiment of the disclosure, the user US (see FIG. 1) may control the operation of the electronic apparatus 100 by providing an input to the external electronic apparatus 200.

However, the disclosure is not limited thereto, and the user US (see FIG. 1) may control the operation of the electronic apparatus 100 by providing an input through the electronic apparatus 100.

Hereinafter, in FIGS. 14 to 17, for convenience of description, it is described that the user US uses the external electronic apparatus 200 to control the operation of the electronic apparatus 100. Referring to FIG. 14, operation S351 (see FIG. 13) of controlling the scrolling method of the calibration document displayed on the display 110 includes an operation of selecting a scrolling mode of the calibration document. In an embodiment of the disclosure, in the operation of selecting the scrolling mode of the calibration document, the electronic apparatus 100 may receive a user input that is an input of the user US who selects the scrolling mode of the calibration document as any one of an auto mode in which the calibration document is automatically scrolled or a manual mode in which the calibration document is manually scrolled. The electronic apparatus 100 may determine the scrolling mode based on the received input of the user.

In an embodiment of the disclosure, in the auto mode in which the calibration document is automatically scrolled, a calibration document of a current image frame displayed on the display 110 may be automatically scrolled to a calibration document of a next image frame according to a set speed.

In an embodiment of the disclosure, in the auto mode, the calibration document of the current image frame may be sequentially scrolled to the calibration document of the next image frame in units of any one of characters, words, and sentences. However, the disclosure is not limited thereto, and the calibration document of the current image frame may be scrolled to the calibration document of the next image frame in units of frames. In an embodiment of the disclosure, the external electronic apparatus 200 may receive an input of the user US for selecting the scrolling mode of the calibration document by using an upper volume key and a lower volume key. When the input is provided to the upper volume key of the external electronic apparatus 200, the electronic apparatus 100 may select the scrolling mode of the calibration document displayed on the display 110 as the auto mode.

When an input of the user US for clicking the upper volume key of the external electronic apparatus 200 is received, the electronic apparatus 100 may select the scrolling mode of the calibration document displayed on the display 110 as the auto mode. However, the disclosure is not limited thereto, and when an input corresponding to a preset condition is provided to select the scrolling mode of the calibration document displayed on the display 110 as the auto mode, the electronic apparatus 100 may select the scrolling mode of the calibration document as the auto mode. When an input of the user US is received via a lower volume key of the external electronic apparatus 200 (e.g., clicking of the lower volume key), the electronic apparatus 100 may operate in the manual mode as the scrolling mode of the calibration document displayed on the display 110.

The external electronic apparatus 200 may receive the input of the user US for clicking the lower volume key, the electronic apparatus 100 may select the manual mode as the scrolling mode of the calibration document displayed on the display 110. However, the disclosure is not limited thereto, and when an input corresponding to a preset condition is provided to select the scrolling mode of the calibration document displayed on the display 110 as the manual mode, the electronic apparatus 100 may select the scrolling mode of the calibration document displayed on the display 110 as the manual mode. In an embodiment of the disclosure, the operation of controlling the scrolling method of the calibration document displayed on the display 110 may include an operation of adjusting a scrolling speed of the calibration document when the scrolling mode of the calibration document displayed on the display 110 is selected as the auto mode.

In an embodiment of the disclosure, in the operation of adjusting the scrolling speed of the calibration document, the user US may increase or decrease a speed of automatically scrolling the calibration document. In an embodiment of the disclosure, when an input of the user US for clicking the upper and lower volume keys of the external electronic apparatus 200 is received, the electronic apparatus 100 may adjust the scrolling speed of the calibration document displayed on the display 110. When an input of the user US for clicking the upper volume key of the external electronic apparatus 200 is received, the electronic apparatus 100 may increase the scrolling speed of the calibration document displayed on the display 110. However, the disclosure is not limited thereto, and when an input corresponding to a preset condition is provided to increase the scrolling speed of the calibration document displayed on the display 110, the electronic apparatus 100 may increase the scrolling speed of the calibration document displayed on the display 110.

In an embodiment of the disclosure, in the case where the scrolling speed of the calibration document is previously set to increase when an input for once tapping the display 110 of the external electronic apparatus 200 is provided, the electronic apparatus 100 may increase the scrolling speed of the calibration document displayed on the display 110 when an input of the user US for satisfying the condition is provided. When an input of the user US for providing an input to the lower volume key of the external electronic apparatus 200 is received, the electronic apparatus 100 may decrease the scrolling speed of the calibration document displayed on the display 110. However, the disclosure is not limited thereto, and when an input corresponding to a preset condition is provided to decrease the scrolling speed of the calibration document, the electronic apparatus 100 may decrease the scrolling speed of the calibration document displayed on the display 110.

In an embodiment of the disclosure, in the case where the scrolling speed of the calibration document is set to decrease when the display 100 of the external electronic apparatus 200 is tapped twice, the electronic apparatus 100 may decrease the scrolling speed of the calibration document displayed on the display 110 when an input of the user US for satisfying the condition is provided.

In an embodiment of the disclosure, the operation of controlling the scrolling method of the calibration document displayed on the display 110 may include an operation of determining a scrolling direction of the calibration document, when the scrolling mode of the calibration document displayed on the display 110 is selected as the manual mode. In an embodiment of the disclosure, in the operation of determining the scrolling direction of the calibration document, the user US may cause the current calibration document to be scrolled to the next calibration document or to the previous calibration document.

In an embodiment of the disclosure, the user US may swipe a screen of the external electronic apparatus 200 to determine the scrolling direction of the calibration document.

When an input for swiping the screen in the left direction is provided to the screen of the external electronic apparatus 200, the electronic apparatus 100 may scroll a calibration document in the current order displayed on the display 110 to a calibration document in the next order. When an input of the user US for swiping the screen in the left direction is received on the screen of the external electronic apparatus 200, the electronic apparatus 100 may scroll a calibration document in the current order displayed on the display 110 to a calibration document in the next order.

However, the disclosure is not limited thereto, and when an input corresponding to a preset condition is provided to scroll the calibration document in the current order displayed on the display 110 to the calibration document in the next order, the electronic apparatus 100 may scroll the calibration document in the current order displayed on the display 110 to the calibration document in the next order.

In an embodiment of the disclosure, when an input is provided to the upper volume key of the external electronic apparatus 200 and an input corresponding to a preset condition is provided to scroll the calibration document in the next order, the electronic apparatus 100 may scroll the calibration document in the current order displayed on the display 110 to the calibration document in the next order. In addition, when an input for dragging and dropping the screen in the left direction is provided on the screen of the external electronic apparatus 200, in the case where an input corresponding to a preset condition is provided to scroll the calibration document in the next order, the electronic apparatus 100 may scroll the calibration document in the current order displayed on the display 110 to the calibration document in the next order.

When an input for swiping the screen in the right direction is provided to the screen of the external electronic apparatus 200, the electronic apparatus 100 may scroll the calibration document in the current order displayed on the display 110 to a calibration document in the previous order.

When an input of the user US for swiping the screen in the right direction is received on the screen of the external electronic apparatus 200, the electronic apparatus 100 may scroll the calibration document in the current order displayed on the display 110 to the calibration document in the previous order. However, the disclosure is not limited thereto, and when an input corresponding to a preset condition is provided to scroll the calibration document in the current order displayed on the display 110 to the calibration document in the previous order, the electronic apparatus 100 may scroll the calibration document in the current order displayed on the display 110 to the calibration document in the previous order.

In an embodiment of the disclosure, when an input is provided to the lower volume key of the external electronic apparatus 200, in the case where an input corresponding to a preset condition is provided to scroll the calibration document in the previous order, the electronic apparatus 100 may scroll the calibration document in the current order displayed on the display 110 to the calibration document in the previous order. In addition, when an input for dragging and dropping the screen in the right direction is provided on the screen of the external electronic apparatus 200, in the case where an input corresponding to a preset condition is provided to scroll the calibration document in the previous order, the electronic apparatus 100 may scroll the calibration document in the current order displayed on the display 110 to the calibration document in the previous order.

FIG. 15 is a conceptual diagram for explaining a method of controlling a moving method of a calibration document displayed on a display according to an embodiment of the disclosure. Referring to FIG. 15, operation S352 (see FIG. 13) of controlling a moving method of the calibration document displayed on the display 110 may include an operation of determining which part of the input document IDa_1 (see FIG. 8A) corresponds to the location of the calibration document CDa (see FIG. 8D) displayed on the display 110. In an embodiment of the disclosure, a part of the calibration document CDa may be displayed on the display 110.

In an embodiment of the disclosure, the user US may determine the location of the calibration document displayed on the display 110 by double tapping a screen of the external electronic apparatus 200. When a double tap input is provided to the screen of the external electronic apparatus 200, the electronic apparatus 100 displays a screen for determining the location of the calibration document displayed on the display 110.

In an embodiment of the disclosure, when an input of the user US for double tapping the screen of the external electronic apparatus 200 is provided to the external electronic apparatus 200, the electronic apparatus 100 may display, on the display 110, the location of the calibration document displayed on the display 110 corresponding to a location last read by the user US before double tapping in the input document IDa_1. When an input of the user US for double tapping the screen of the external electronic apparatus 200 is provided to the external electronic apparatus 200, the electronic apparatus 100 may display the location of the calibration document corresponding to the location last read in the entire content of the input document IDa_1 in the form of a mini map on the display 110. In an embodiment of the disclosure, the electronic apparatus 100 may display the location of the calibration document corresponding to the location last read in the entire content of the input document IDa_1 in the form of a bar PB.

In an embodiment of the disclosure, operation S352 of controlling the moving method of the calibration document displayed on the display 110 may include an operation of displaying the calibration document CDa corresponding to a desired location in the input document IDa_1 on the display 110.

In an embodiment of the disclosure, the user US may drag and drop the screen of the external electronic apparatus 200 to display the calibration document CDa corresponding to the desired location in the input document IDa_1 on the display 110 When an input for dragging and dropping the screen is provided to the screen of the external electronic apparatus 200, the electronic apparatus 100 may display the calibration document CDa corresponding to a dropped location in an input document ID_a on the display 110.

In an embodiment of the disclosure, the user US may view the input document IDa_1 in the form of the mini-map displayed on the display 110 and drag and drop the input document IDa_1 to a desired location. In an embodiment of the disclosure, operation S352 of controlling the moving method of the calibration document displayed on the display 110 may include an operation of displaying the calibration document CDa corresponding to the location last read by the user US on the display 110 before the electronic apparatus 100 controls the movement of the calibration document.

In an embodiment of the disclosure, the electronic apparatus 100 may display the calibration document CDa corresponding to the desired location in the input documents ID_a on the display 110, and then display the calibration document CDa corresponding to the last read location on the display 110 before controlling the movement of the calibration document. When an input for double tapping the screen is provided to the screen of the external electronic apparatus 200, the electronic apparatus 100 may display the calibration document CDa corresponding to the last read location on the display 110. When an input of the user US for double tapping the screen of the external electronic apparatus 200 is provided to the external electronic apparatus 200, the electronic apparatus 100 display the calibration document CDa corresponding to the last read location on the display 110 before controlling the movement of the calibration document.

However, the disclosure is not limited thereto, and each of control operations shown in FIG. 15 may be performed when an input corresponding to a preset condition is provided to operate each control operation.

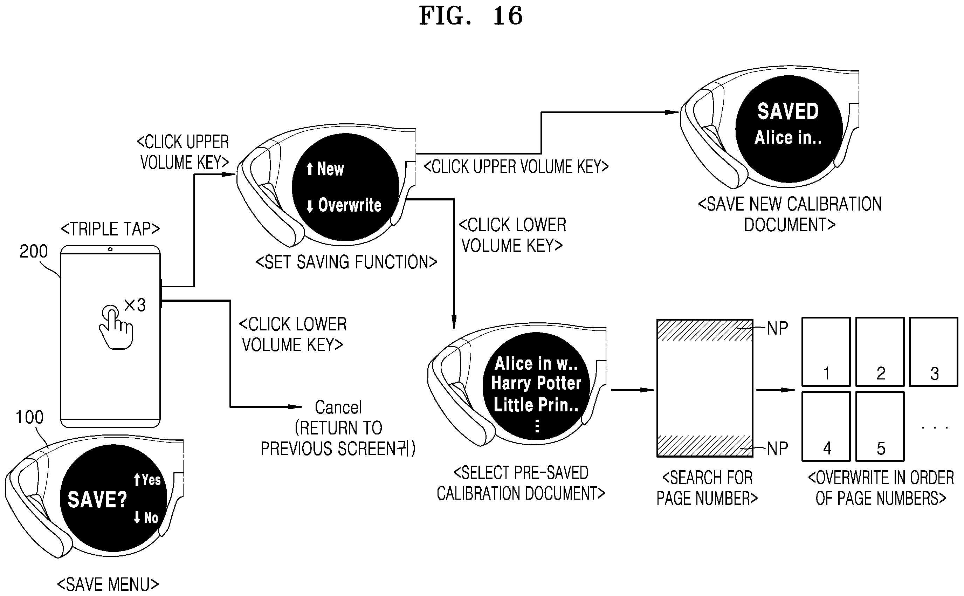

FIG. 16 is a conceptual diagram for explaining a method of controlling a saving method of an obtained calibration document according to an embodiment of the disclosure.

Referring to FIGS. 13 and 16, the operating method of the electronic apparatus 100 (see FIG. 8D) in an embodiment of the disclosure may further include operation of saving the obtained calibration document CDa (see FIG. 8D). In an embodiment of the disclosure, the operation of saving the obtained calibration document CDa may be subsequent to an operation of displaying the calibration document CDa on the display 110.

In an embodiment of the disclosure, the operation of saving the obtained calibration document CDa includes an operation of displaying a save menu for selecting whether to save the obtained calibration document CDa.

In an embodiment of the disclosure, in the operation of displaying the save menu, the user US may display the save menu for selecting whether to save the obtained calibration document CDa on the display 110. In an embodiment of the disclosure, when an input for triple tapping the screen of the external electronic apparatus 200 is provided to the external electronic apparatus 200, the electronic apparatus 100 may display the save menu for selecting whether to save the obtained calibration document CDa on the display 110. In an embodiment of the disclosure, when an input of the user US for triple tapping on the screen of the external electronic apparatus 200 is received, the electronic apparatus 100 may display the save menu for selecting whether to save the obtained calibration document CDa on the display 110.

In an embodiment of the disclosure, the operation of saving the obtained calibration document CDa includes an operation of selecting whether to save the obtained calibration document CDa.

In an embodiment of the disclosure, in the operation of selecting whether to save the obtained calibration document CDa, the user US may select whether or not to save the obtained calibration document CDa.

In an embodiment of the disclosure, as an input for clicking an upper volume key and a lower volume key of the external electronic apparatus 200 is provided, the electronic apparatus 100 may select whether to save the obtained calibration document CDa. When an input is provided to the upper volume key of the external electronic apparatus 200, the electronic apparatus 100 selects to save the obtained calibration document CDa.

When the external electronic apparatus 200 receives an input of the user US for clicking the upper volume key of the external electronic apparatus 200, the electronic apparatus 100 may select to save the obtained calibration document CDa. However, the disclosure is not limited thereto, and when an input corresponding to a preset condition is provided to select to save the obtained calibration document CDa, the electronic apparatus 100 may select to save the obtained calibration document CDa..

When an input is provided to the lower volume key of the external electronic apparatus 200, the electronic apparatus 100 selects not to save the obtained calibration document CDa, and displays the screen again before the save menu is displayed on the display 110. When the external electronic apparatus 200 receives an input of the user US for clicking the lower volume key of the external electronic apparatus 200, the electronic apparatus 100 may select not to save the obtained calibration document CDa.

However, the disclosure is not limited thereto, and when an input corresponding to a preset condition is provided to select not to save the obtained calibration document CDa, the electronic apparatus 100 may select not to save the obtained calibration document CDa. In an embodiment of the disclosure, the operation of saving the obtained calibration document CDa may include an operation of selecting a method of saving the obtained calibration document CDa when it is selected to save the obtained calibration document CDa.

In an embodiment of the disclosure, in the selecting the method of saving the obtained calibration document CDa, the user US may select whether to save the obtained calibration document CDa as a new document or by adding the obtained calibration document CDa to a pre-saved calibration document.

In an embodiment of the disclosure, when an input is provided to the upper volume key of the external electronic apparatus 200, the electronic apparatus 100 may save the obtained calibration document CDa as a new document in the electronic apparatus 100. In an embodiment of the disclosure, the obtained calibration document CDa may be saved in the external electronic apparatus 200 or a server through the communication interface 170 (see FIG. 3). When the external electronic apparatus 200 receives an input of the user US for clicking the upper volume key of the external electronic apparatus 200, the electronic apparatus 100 may save the obtained calibration document CDa as a new document.

However, the disclosure is not limited thereto, and when an input corresponding to a preset condition is provided to save the obtained calibration document CDa as a new document, the electronic apparatus 100 may save the obtained calibration document CDa as a new document. In an embodiment of the disclosure, when an input is provided to the lower volume key of the external electronic apparatus 200, the electronic apparatus 100 may save the obtained calibration document CDa by adding the obtained calibration document CDa to a pre-saved calibration document. In an embodiment of the disclosure, the obtained calibration document CDa may be added to a pre-saved calibration document and saved in the external electronic apparatus 200 or a server through the communication interface 170 (see FIG. 3).

When the external electronic apparatus 200 receives an input of the user US for clicking the lower volume key of the external electronic apparatus 200, the electronic apparatus 100 may save the obtained calibration document CDa by adding the obtained calibration document CDa to a pre-saved calibration document.

However, the disclosure is not limited thereto, and when an input corresponding to a preset condition is provided to save the obtained calibration document CDa by adding the obtained calibration document CDa to a pre-saved calibration document, the electronic apparatus 100 may save the obtained calibration document CDa by adding the obtained calibration document CDa to a pre-saved calibration document.

In an embodiment of the disclosure, in the operation of saving the obtained calibration document CDa by adding the obtained calibration document CDa to the pre-saved calibration document in the electronic apparatus 100, the obtained calibration document CDa may be saved after being added to the pre-saved calibration document, by comparing a page number NP found in the pre-saved calibration document with a page number of the obtained calibration document CDa. In an embodiment of the disclosure, the electronic apparatus 100 may save the obtained calibration document CDa by searching for the page number NP located at the upper end or lower end of the pre-saved calibration document, and then comparing the found page number NP with the page number of the obtained calibration document CDa, and sequentially adding the obtained calibration document CDa to the pre-saved calibration document.

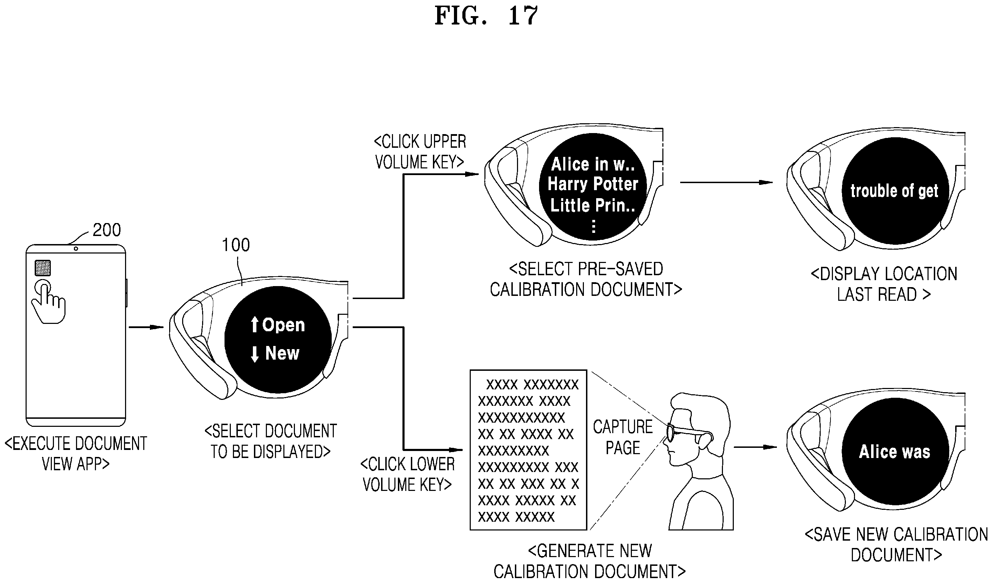

FIG. 17 is a conceptual diagram for explaining a method of controlling a loading method of a calibration document according to an embodiment of the disclosure. Referring to FIGS. 4 and 17, the operating method of the electronic apparatus 100 (see FIG. 8D ) in an embodiment of the disclosure may further include an operation of loading a pre-obtained calibration document.

In an embodiment of the disclosure, the operation of loading the pre-obtained calibration document may be prior to operation S100 of obtaining an input document. In an embodiment of the disclosure, when the pre-obtained calibration document is loaded, the electronic apparatus 100 may display the loaded pre-obtained calibration document on the display 110.

In an embodiment of the disclosure, the operation of loading the pre-obtained calibration document may include an operation of selecting whether to load the pre-obtained calibration document. In an embodiment of the disclosure, the operation of selecting whether to load the pre-obtained calibration document may be performed while a document viewer app for controlling the operating method of the electronic apparatus 100 of the disclosure is being executed in the external electronic apparatus 200.

In an embodiment of the disclosure, the user US may select whether to load the pre-obtained calibration document by using upper and lower volume keys of the external electronic apparatus 200.
When an input is provided to the upper volume key of the external electronic apparatus 200, the electronic apparatus 100 selects to load the pre-obtained calibration document.When the external electronic apparatus 200 receives an input of the user US for clicking the upper volume key of the external electronic apparatus 200, the electronic apparatus 100 may select to load the pre-obtained calibration document.

However, the disclosure is not limited thereto, and when an input corresponding to a preset condition is provided to select to load the pre-obtained calibration document, the electronic apparatus 100 may select to load the pre-obtained calibration document. In an embodiment of the disclosure, the electronic apparatus 100 may load the pre-obtained calibration document saved in the external electronic apparatus 200 or a server through the communication interface 170 (see FIG. 3). Also, the electronic apparatus 100 may load the pre-obtained calibration document saved in the memory 140 of the electronic apparatus 100.

When an input is provided to the lower volume key of the external electronic apparatus 200, the electronic apparatus 100 selects not to load the pre-obtained calibration document. In this case, the electronic apparatus 100 may operate from operation S100 of obtaining the input document ID (see FIG. 5).When the external electronic apparatus 200 receives an input of the user US for clicking the lower volume key of the external electronic apparatus 200, the electronic apparatus 100 may select not to load the pre-obtained calibration document.

However, the disclosure is not limited thereto, and when an input corresponding to a preset condition is provided to select not to load the pre-obtained calibration document, the electronic apparatus 100 may select not to load the pre-obtained calibration document.

In an embodiment of the disclosure, when it is selected to load the pre-obtained calibration document, the operation of loading the pre-obtained calibration document may include an operation of displaying the loaded pre-obtained calibration document on the display 110.

An embodiment of the disclosure provides the electronic apparatus 100 including the display 110, the memory 140 storing at least one instruction, and the at least one processor 150 executing the at least one instruction stored in the memory 140. The at least one processor 150 according to an embodiment of the disclosure may obtain the input documents ID, IDa, IDb, and IDc. The at least one processor 150 may recognize an element including at least one of character, image, or a combination of character and image from each of the input documents ID, IDa, IDb, and IDc. The at least one processor 150 may classify a type of each of the input documents ID, IDa, IDb, IDc based on a kind of the recognized element. The at least one processor 150 may obtain the calibration documents CDa, CDb, and CDc by arranging the recognized elements in a row based on the classified type of each of the input documents ID, IDa, IDb, and IDc. The at least one processor 150 may control the display to display the obtained calibration documents CDa, CDb, and CDc.
In an embodiment of the disclosure, the at least one processor 150 may classify the input document IDa as a first type when the recognized elements include the characters EMa_1, EMa_2, and EMa_3. The at least one processor 150 may identify the order OEMa in which the recognized characters EMa_1, EMa_2, and EMa_3 are arranged based on the first type. The at least one processor 150 may obtain the calibration document CDa by arranging the recognized characters EMa_1, EMa_2, and EMa_3 in a row according to the identified order OEMa based on the first type.

In an embodiment of the disclosure, the at least one processor 150 may obtain the calibration character CEMa by calibrating the recognized character EMa_1. The at least one processor 150 may obtain the calibration document CDa by arranging the calibration characters CEMa in a row according to the identified order OEMa.

In an embodiment of the disclosure, the at least one processor 150 may calibrate the size of the calibration character CEMa to be larger than the size of the recognized character EMa_1 by magnifying the size of the recognized character EMa_1.

In an embodiment of the disclosure, the recognized elements may include the plurality of characters EMa_1, EMa_2, and EMa_3. In an embodiment of the disclosure, the at least one processor 150 may classify the type of the input document IDa as a first sub type or a second sub type based on the arrangement of the plurality of recognized characters EMa_1, EMa_2, and EMa_3. The at least one processor 150 may obtain the calibration documents CDa_1 and CDa_2 by arranging the plurality of recognized characters EMa_1, EMa_2, and EMa_3 in a row according to the identified orders OEMa_1, OEMa_2, and ORGa based on any one sub type of the first sub type or the second sub type. In an embodiment of the disclosure, the first sub type may be a type in which the input document IDa_1 includes the first text TG_1 including the at least one character EMa_1. The second sub type may be a type in which the input document IDa_2 includes the second text TG_2 including the at least one character EMa_2 and the third text TG_3 including the at least one character EMa_3 and distinguished from the second text TG_2.

In an embodiment of the disclosure, the at least one processor 150 may classify the input document IDb as the second type when the recognized elements include the characters EMa_4 and EMa_5 and the image EMb_1. The at least one processor 150 may identify the orders OEMa_4, OEMa_5, and OIG in which the recognized characters EMa_4 and EMa_5 and image EMb_1 are arranged based on the second type. The at least one processor 150 may obtain the calibration document CDb by arranging the recognized characters EMa_4 and EMa_5 and the recognized image EMb_1 in a row according to the identified orders OEMa_4, OEMa_5, and OIG.

In an embodiment of the disclosure, the at least one processor 150 may obtain calibration characters by calibrating the recognized characters EMa_4 and EMa_5. The at least one processor 150 may obtain the calibration document CDb by arranging the calibration characters and the image EMb_1 in a row according to the identified orders OEMa_4, OEMa_5, and OIG.

In an embodiment of the disclosure, the at least one processor 150 may classify the input document IDc as a third type when the recognized elements include the scene SF including at least one of the character EMa_6 or the images EMb_2 and EMb_3. The at least one processor 150 may identify the order OSG in which the recognized scenes SF are arranged based on the third type. The at least one processor 150 may obtain the calibration document CDc by arranging the scenes SF in a row according to the identified order OSG.

In an embodiment of the disclosure, the scene SF may include the character scene SF_1 including the character EMa_6 and the non-character scene SF_2 not including the character EMa_6. In an embodiment of the disclosure, the at least one processor 150 may recognize the character EMa_6 from the character scene SF_1. The at least one processor 150 may obtain the calibration document CDc so that the recognized character EMa_6 is aligned with the character scene SF_1 corresponding thereto.

In an embodiment of the disclosure, the at least one processor 150 may control a scrolling method and a moving method of each of the calibration documents CDa, CDb, and CDc displayed on the display 110 and a saving method of each of the obtained calibration documents CDa, CDb, and CDc. An embodiment of the disclosure provides an operating method of the electronic apparatus 100 including the display 110.

In an embodiment of the disclosure, the operating method of the electronic apparatus 100 includes obtain the input documents ID, IDa, IDb, and IDc (S100). The operating method of the electronic apparatus 100 may include recognizing an element including at least one of character, image, or a combination of character and image from each of the input documents ID, IDa, IDb, and IDc (S210). The operating method of the electronic apparatus 100 may include classifying a type of each of the input documents ID, IDa, IDb, IDc based on a kind of the recognized element (S220). The operating method of the electronic apparatus 100 may include obtaining the calibration documents CDa, CDb, and CDc by arranging the recognized elements in a row based on the classified type of each of the input documents ID, IDa, IDb, and IDc (S300). The operating method of the electronic apparatus 100 may include controlling the display (110) to display the output image IM including the obtained calibration documents CDa, CDb, and CDc (S400).

In an embodiment of the disclosure, operation S220 of classifying the type of each of the input documents ID, IDa, IDb, and IDc may classify the input document IDa as a first type when the recognized elements include the characters EMa_1, EMa_2, and EMa_3. In an embodiment of the disclosure, operation S300 of obtaining the calibration document CDa may include identifying the order OEMa of the recognized characters EMa_1, EMa_2, and EMa_3 based on the first type (S310). Operation S300 of obtaining the calibration document CDa may include obtaining the calibration document CDa by arranging the recognized characters EMa_1, EMa_2, and EMa_3 in a row according to the identified order OEMa (S330).

In an embodiment of the disclosure, the operating method of the electronic apparatus 100 may further include obtaining the calibration character CEMa by calibrating the recognized character EMa_1 (S320). In an embodiment of the disclosure, operation S330 of obtaining the calibration character CDa may obtain the calibration document CDa by arranging the calibration characters CEMa in a row according to the identified order OEMa.

In an embodiment of the disclosure, the recognized elements may include the plurality of characters EMa_1, EMa_2, and EMa_3. In an embodiment of the disclosure, the operating method of the electronic apparatus 100 may further include classifying the type of the input document IDa as a first sub type or a second sub type based on the arrangement of the plurality of recognized characters EMa_1, EMa_2, and EMa_3. Operation S330a of obtaining the calibration documents CDa_1 and CDa_2 may include obtaining the calibration documents CDa_1 and CDa_2 by arranging the plurality of recognized characters EMa_1, EMa_2, and EMa_3 in a row according to the identified orders OEMa_1, OEMa_2, and ORGa based on any one sub type of the first sub type or the second sub type. In an embodiment of the disclosure, the first sub type may be a type in which the input document IDa_1 includes the first text TG_1 including the at least one character EMa_1. The second sub type may be a type in which the input document IDa_2 includes the second text TG_2 including the at least one character EMa_2 and the third text TG_3 including the at least one character EMa_3 and distinguished from the second text TG_2.

In an embodiment of the disclosure, operation S220 of classifying the type of the input document IDb may include classifying the input document IDb as the second type when the recognized elements include the characters EMa_4 and EMa_5 and the image EMb_1. Operation S300b of obtaining the calibration document CDb may include operation S310b of identifying the orders OEMa_4, OEMa_5, and OIG in which the recognized characters EMa_4 and EMa_5 and the recognized image EMb_1 are arranged based on the second type. Operation S300b of obtaining the calibration document CDb may include operation S330b of obtaining the calibration document CDb by arranging the recognized characters EMa_4 and EMa_5 and the recognized image EMb_1 in a row according to the identified orders OEMa_4, OEMa_5, and OIG.

In an embodiment of the disclosure, the operating method of the electronic apparatus 100 may further include obtaining calibration characters by calibrating the recognized characters EMa_4 and EMa_5 (S320b). Operation S330b of obtaining the calibration document CDb may include obtaining the calibration document CDb by arranging the calibration characters and the image EMb_1 in a row according to the identified orders OEMa_4, OEMa_5, and OIG.

In an embodiment of the disclosure, an operation of classifying the type of the input document IDc may include classify the input document IDc as a third type when the recognized elements include the scene SF including at least one of the character EMa_6 or the images EMb_2 and EMb_3. Operation S300c of obtaining the calibration document CDc may include operation S310c of identifying the order OSG of the recognized scenes SF based on the third type. Operation S300c of obtaining the calibration document CDc may include operation S330c of obtaining the calibration document CDc by arranging the scenes SF in a row according to the identified order OSG.

In an embodiment of the disclosure, the scene SF may include the character scene SF_1 including the character EMa_6. The scene SF may include the non-character scene SF_2 not including the character EMa_6. In an embodiment of the disclosure, operation S200 of recognizing the element may further include recognizing the character EMa_6 from the character scene SF_1. Operation S330c of obtaining the calibration document CDc may include obtaining the calibration document CDc so that the recognized character EMa_6 is aligned with the character scene SF_1 corresponding thereto.

In an embodiment of the disclosure, the operating method of the electronic apparatus 100 may include controlling a scrolling method of a calibration document displayed on the display 110 (S351). The operating method of the electronic apparatus 100 may include controlling a moving method of the calibration document displayed on the display 110 (S352). The operating method of the electronic apparatus 100 may further include controlling a saving method of the obtained calibration document CDc (S353).

In an embodiment of the disclosure, a computer-readable recording medium storing a program for causing a computer to perform at least one of the methods described above may be provided.

The operating methods performed by the electronic apparatus 100, as described above, may be implemented as a hardware element, a software element, and/or a combination of the hardware element and the software element. The program may be executed by any system capable of executing computer-readable instructions.

The software may include a computer program, code, instructions, or a combination of one or more thereof, and may configure a processor to operate as desired or may instruct the processor independently or collectively. The software may be implemented as a computer program including instructions stored in a computer-readable storage medium.

Examples of the computer-readable recording medium may include a magnetic storage medium (e.g., ROM, RAM, floppy disk, hard disk, etc.) and an optical readable medium (e.g., compact disc-ROM (CD-ROM), digital versatile disc (DVD), etc.). The computer-readable recording medium may be distributed in network-connected computer systems, and computer-readable code may be stored and executed in a distributed manner. The recording medium may be readable by a computer, may be stored in a memory, and may be executed by a processor.

The computer-readable storage medium may be provided in the form of a non-transitory storage medium. The "non-transitory storage medium" is a tangible device and only means not including a signal (e.g., electromagnetic wave). This term does not distinguish between a case where data is semi-permanently stored in a storage medium and a case where data is temporarily stored in a storage medium. For example, the "non-transitory storage medium" may include a buffer in which data is temporarily stored.

Also, the methods according to various embodiments of the disclosure disclosed herein may be provided by being included in a computer program product.
The computer program products may be traded between a seller and a buyer as commodities. The computer program product may include a software program, a computer-readable storage medium storing the software program. The computer program product may include a product (e.g., a downloadable application) in the form of a software program that is electronically distributed through a manufacturer of the electronic apparatus 100 or an electronic market (e.g., a Samsung galaxy store). For electronic distribution, at least a part of the software program may be stored in a storage medium, or may be temporarily generated. In this case, the storage medium may be a storage medium of a server of a manufacturer of the electronic apparatus 100, a server of an electronic market, or a relay server temporarily storing a software program.

As described above, although the embodiments of the disclosure have been described with reference to the restrictive embodiments and drawings, various modifications and variations may be made thereto from the above description by those of ordinary skill in the art. For example, appropriate results may be achieved even when the technologies described above are performed in an order different from the methods described above, and/or elements of the computer system or modules described above are coupled or combined in a manner different from the methods described above or are replaced or substituted for other elements or equivalents.

## Claims

1. An electronic apparatus (100) comprising: a display (110); a memory (140) storing at least one instruction; and at least one processor (150) configured to execute the at least one instruction stored in the memory (140) to:
obtain input documents (ID, IDa, IDb, IDc);
recognize an element comprising at least one of a character, an image, or a combination of the character and the image from each of the input documents (ID, IDa, IDb, IDc);
classify a type of each of the input documents (ID, IDa, IDb, IDc) based on a kind of the recognized element; obtain calibration documents (CDa, CDb, CDc) by arranging the recognized elements in a row based on the classified type of each of the input documents (ID, IDa, IDb, IDc); and
control the display (110) to display the obtained calibration documents (CDa, CDb, CDc).

2. The electronic apparatus (100) of claim 1, wherein the at least one processor (150) is further configured to execute the at least one instruction to:
classify the input document (IDa) as a first type when the recognized elements include characters (EMa_1, EMa_2, EMa_3),
identify an order (OEMa) in which the recognized characters (EMa_1, EMa_2, EMa_3) are arranged based on the first type, and
obtain the calibration document (CDa) by arranging the recognized characters (EMa_1, EMa_2, EMa_3) in a row according to the identified order (OEMa).

3. The electronic apparatus (100) of claim 2, wherein the at least one processor (150) is further configured to execute the at least one instruction to: obtain a calibration character (CEMa) by calibrating the recognized character (EMa_1), and
obtain the calibration document CDa by arranging the calibration characters (CEMa) in a row according to the identified order (OEMa).

4. The electronic apparatus (100) of claim 3, wherein the at least one processor (150) is further configured to execute the at least one instruction to calibrate a size of the calibration character (CEMa) to be larger than a size of the recognized character (EMa_1) by magnifying the size of the recognized character (EMa_1).

5. The electronic apparatus (100) of any one of claims 2 to 4, wherein
the recognized elements include the plurality of characters (EMa_1, EMa_2, EMa_3), and
the at least one processor (150) is further configured to execute the at least one instruction to:
classify the type of the input document (IDa) as a first sub type or a second sub type based on an arrangement of the plurality of recognized characters (EMa_1, EMa_2, EMa_3), and
obtain calibration documents (CDa_1, CDa_2) by arranging the plurality of recognized characters (EMa_1, EMa_2, EMa_3) in a row according to identified orders (OEMa_1, OEMa_2, ORGa) based on any one sub type of the first sub type or the second sub type,
the first sub type is a type in which the input document (IDa_1) includes a first text (TG_1) including the at least one character (EMa_1), and the second sub type is a type in which the input document (IDa_2) includes a second text (TG_2) including the at least one character (EMa_2) and a third text (TG_3) that includes the at least one character (EMa_3) and is distinguished from the second text (TG_2).

6. The electronic apparatus (100) of claim 1, wherein the at least one processor (150) is further configured to execute the at least one instruction to:
classify the input document (IDb) as the second type when the recognized elements include characters (EMa_4, EMa_5) and an image (EMb_1),
identify orders (OEMa_4, OEMa_5, OIG) in which the recognized characters (EMa_4, EMa_5) and image (EMb_1) are arranged based on the second type, and
obtain the calibration document (CDb) by arranging the recognized characters (EMa_4, EMa_5) and the recognized image (EMb_1) in a row according to the identified orders (OEMa_4, OEMa_5, OIG).

7. The electronic apparatus (100) of claim 6, wherein the at least one processor (150) is further configured to execute the at least one instruction to:
obtain calibration characters by calibrating the recognized characters (EMa_4, EMa_5), and
obtain the calibration document (CDb) by arranging the calibration characters and the image (EMb_1) in a row according to the identified orders (OEMa_4, OEMa_5, OIG).

8. The electronic apparatus (100) of claim 1, wherein the at least one processor (150) is further configured to execute the at least one instruction to:
classify the input document (IDc) as a third type when the recognized elements include a scene (SF) including at least one of a character (EMa_6) or images (EMb_2, EMb_3),
identify the order (OSG) in which the recognized scene (SF) is arranged based on the third type, and
obtain the calibration document (CDc) by arranging the scenes (SF) in a row according to the identified order (OSG).

9. The electronic apparatus (100) of claim 8, wherein the scene (SF) includes a character scene (SF_1) including the character (EMa_6) and a non-character scene (SF_2) not including the character (EMa_6), and
the at least one processor (150) is further configured to execute the at least one instruction to:
recognize the character (EMa_6) from the character scene (SF_1), and
obtain the calibration document (CDc) so that the recognized character (EMa_6) is aligned with the character scene (SF_1) corresponding thereto.

10. The electronic apparatus (100) of any one of claims 1 to 9, wherein the at least one processor (150) is further configured to execute the at least one instruction to control a scrolling method and a moving method of each of the calibration documents (CDa, CDb, CDc) displayed on the display (110) and a saving method of each of the obtained calibration documents (CDa, CDb, CDc).

11. An operating method of the electronic apparatus (100) comprising a display (110), the operating method comprising:
obtaining input documents (ID, IDa, IDb, IDc) (S100);
recognizing an element comprising at least one of a character, an image, or a combination of the character and the image from each of the input documents (ID, IDa, IDb, IDc) (S210);
classifying a type of each of the input documents (ID, IDa, IDb, IDc) based on the kind of the recognized element (S220); obtaining calibration documents (CDa, CDb, CDc) by arranging the recognized elements in a row based on the classified type of each of the input documents (ID, IDa, IDb, IDc) (S300); and
controlling the display (110) to display the obtained calibration documents (CDa, CDb, CDc) (S400).

12. The operating method of claim 11, wherein the classifying of the type of each of the input documents (ID, IDa, IDb, IDc) (S220) includes
classifying the input document (IDa) as a first type when the recognized elements include characters (EMa_1, EMa_2, EMa_3), and
the obtaining of the calibration document (CDa) (S300) includes:
identifying an order (OEMa) in which the recognized characters (EMa_1, EMa_2, EMa_3) are arranged based on the first type (S310); and
obtaining the calibration document (CDa) by arranging the recognized characters (EMa_1, EMa_2, EMa_3) in a row according to the identified order (OEMa) (S330).

13. The operating method of claim 12, further comprising: obtaining a calibration character (CEMa) by calibrating the recognized character (EMa_1) (S320),
wherein the obtaining of the calibration document (CDa) (S330) includes
obtaining the calibration document CDa by arranging the calibration characters (CEMa) in a row according to the identified order (OEMa).

14. The operating method of any one of claims 12 to 13, wherein the recognized elements include the plurality of characters (EMa_1, EMa_2, EMa_3),
the operating method further comprises:
classifying the type of the input document (IDa) as a first sub type or a second sub type based on an arrangement of the plurality of recognized characters (EMa_1, EMa_2, EMa_3),
the obtaining of the calibration documents (CDa_1, CDa_2) (S330a) includes
obtaining the calibration documents (CDa_1, CDa_2) by arranging the plurality of recognized characters (EMa_1, EMa_2, EMa_3) in a row according to identified orders (OEMa_1, OEMa_2, ORGa) based on any one sub type of the first sub type or the second sub type, and
the first sub type is a type in which the input document (IDa_1) includes a first text (TG_1) including the at least one character (EMa_1), and the second sub type is a type in which the input document (IDa_2) includes a second text (TG_2) including the at least one character (EMa_2) and a third text (TG_3) that includes the at least one character (EMa_3) and is distinguished from the second text (TG_2).

15. A computer-readable recording medium having recorded thereon a program for causing a computer to perform the operating method of any one of claims 11 to 14.
